(19) Europäisches Patentamt
European Patent Office
Office européen des brevets

(11) **EP 2 270 541 B1**

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(51) Int Cl.:
*G01S 13/90* *(2006.01)*    *G01S 15/89* *(2006.01)*
*G01S 17/89* *(2006.01)*    *G01S 13/74* *(2006.01)*

(21) Anmeldenummer: **10006560.6**

(22) Anmeldetag: **23.06.2010**

(54) **Vorrichtung und Abbildungsverfahren mit synthetischer Apertur zum Bestimmen eines Einfallwinkels und/oder einer Entfernung**

Device and imaging method utilising synthetic aperture for determining an angle of incidence and/or a distance

Dispositif et procédé d'imagerie dotés d'une ouverture synthétique et destinés à la détermination d'un angle d'incidence et/ou d'un éloignement

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.06.2009 DE 102009030075**

(43) Veröffentlichungstag der Anmeldung:
**05.01.2011 Patentblatt 2011/01**

(73) Patentinhaber: **Symeo GmbH**
**85579 Neubiberg (DE)**

(72) Erfinder:
• **Max, Stephan, Dr.**
**38518 Neubokel/Gifhorn (DE)**
• **Vossiek, Martin, Dr.**
**31139 Hildesheim (DE)**

(74) Vertreter: **Pfrang, Tilman et al**
**Meissner Bolte Patentanwälte**
**Rechtsanwälte Partnerschaft mbB**
**Widenmayerstraße 47**
**80538 München (DE)**

(56) Entgegenhaltungen:
**DE-A1-102005 000 732**

• L. J. Cutrona: "Synthetic Aperture Radar"; "Chapter 21" In: Merrill I. Skolnik: "Radar Handbook, 2nd ed." 1990, McGraw Hill , Boston , XP007914918 ISBN: 0-07-057913-X , Seiten 21.1-21.23 * Subsec. "Theoretic Aspects of Synthetic Aperture Generation"; Seite 21.17 * * *
• "Section 5.5: Generalized Focussed Imaging" In: Dean L. Mensa: "High Resolution Radar Cross-Section Imaging" 1991, Artech House , Boston , XP007914929 ISBN: 0-89006-389-3 , Seiten 183-199 * Seite 183, Absatz 5.5 - Seite 187, Spalte 17; Abbildungen 5.41, 5.51 * * *
• RUDOLF H ET AL: "A parallelogram shaped arm for improving circular SARs" GEOSCIENCE AND REMOTE SENSING SYMPOSIUM, 1999. IGARSS '99 PROCEEDINGS. IEEE 1999 INTERNATIONAL HAMBURG, GERMANY 28 JUNE-2 JULY 1999, PISCATAWAY, NJ, USA,IEEE, US LNKD-DOI:10.1109/IGARSS.1999.773562, Bd. 1, 28. Juni 1999 (1999-06-28), Seiten 553-555, XP010337261 ISBN: 978-0-7803-5207-0
• VOSSIEK M ET AL: "Inverse Synthetic Aperture Secondary Radar Concept for Precise Wireless Positioning" IEEE TRANSACTIONS ON MICROWAVE THEORY AND TECHNIQUES, IEEE SERVICE CENTER, PISCATAWAY, NJ, US LNKD-DOI:10.1109/TMTT.2007.908668, Bd. 55, Nr. 11, 1. November 2007 (2007-11-01), Seiten 2447-2453, XP011195400 ISSN: 0018-9480

EP 2 270 541 B1

**Beschreibung**

Die Erfindung bezieht sich auf ein Abbildungsverfahren mit synthetischer Apertur zum Bestimmen eines Einfallswinkels und/oder einer Entfernung eines Sensors zu zumindest einem Objekt oder Transponder im Raum mit den oberbegrifflichen Merkmalen gemäß Patentanspruch 1 bzw. eine Vorrichtung dazu mit den oberbegrifflichen Merkmalen gemäß Patentanspruch 14.

Allgemein bekannt sind sogenannte SA-Systeme (SA: synthetischen Apertur), deren Einsatz für einen Mikrowellenbereich z.B. in "Radar mit realer und synthetischer Apertur", H. Klausing und W. Holpp, Oldenbourg, 2000, Kapitel 8, S. 213 ff. oder in M. Younis, C. Fischer, and W. Wiesbeck, "Digital beamforming in SAR systems", Geoscience and Remote Sensing, IEEE Transactions on, vol. 41, pp. 1735-1739, 2003, ausführlich dargestellt ist. Ein Einsatz von SA-Verfahren ist außerdem bekannt aus z.B. WO 2006/072471, DE 199 10 715 C2 oder EP 0550073 B1. Im Bereich der sogenannten Radarsensorik werden in diesem Zusammenhang auch SAR (synthetic aperture radar) oder auch SDRS (Software-Defined Radar Sensors) als Bezeichnungen verwendet.

Nahezu identische Verfahren sind im Bereich von Medizin oder Ultraschallmesstechnik seit langem unter den Begriffen Holographie bzw. Tomographie bekannt. Beschreibungen der letztgenannten Verfahren finden sich in z.B. M. M. Vossiek, V. Mágori, and H. Ermert, "An Ultrasonic Multielement Sensor System for Position Invariant Object Identification", vorgetragen beim IEEE International Ultrasonics Symposium, Cannes, France, 1994 oder in M. Vossiek, "Ein Ultraschall-Mehrwandlersystem zur lageunabhängigen Objekterkennung für die industrielle Automation", Fortschritt-Berichte VDI, Reihe 8: Mess-, Steuerungs- und Regelungstechnik, vol. 564, 1996.

Allgemein bekannt ist, dass SA-Verfahren mit allen kohärenten Wellenformen, z.B. im Radarbereich mit elektromagnetischen Wellen und mit akustischen Wellen z.B. Ultraschallwellen oder mit kohärentem Licht durchgeführt werden können. SA-Verfahren mit können auch mit jeder nicht-kohärenten Wellenform, die mit einer kohärenten Signalform moduliert wird, durchgeführt werden.

SA-Verfahren werden auch in Systemen verwendet, bei denen ein wellenbasierter Sensor zu einem kooperativen Ziel misst, wie z.B. zu einem kohärent reflektierenden Backscatter-Transponder. Beispiele und Beschreibungen finden sich in DE 10 2005 000 732 A1 und in M. Vossiek, A. Urban, S. Max, P. Gulden, "Inverse Synthetic Aperture Secondary Radar Concept for Precise Wireless Positioning", IEEE Trans. on Microwave Theory and Techniques, vol. 55, issue 11, Nov. 2007, pp. 2447 - 2453.

Dass auch Signale von Wellenquellen, der Verlauf und Kohärenz der Empfänger nicht kennt, mit SA-Verfahren verarbeitet werden können, wenn aus zumindest zwei räumlich getrennt empfangenen Signalen zumindest ein Signal gebildet wird, das nicht mehr die Absolutphase sondern Phasendifferenzen der Signale beschreibt, ist bekannt aus z.B. DE 195 12 787 A1. In diesem Fall kann ein Signal, das von einem Objekt abgestrahlt oder von einem Transponder ausgestrahlt wurde, von zwei Empfängern, die sich in zueinander bekanntem Abstand befinden, aufgezeichnet werden, wobei die Phasendifferenz zwischen diesen beiden Signalen in der weiteren Auswertung verwendet werden kann. Transpondersysteme, für die sich in der zuvor dargestellten Anordnungsvariante ein nachfolgend dargestelltes Prinzip eignet, sind z.B. Sekundärradarsysteme, wie sie dargestellt sind insbesondere in DE 101 57 931 C2, in DE 10 2006 005 281, in DE 10 2005 037 583, in Stelzer, A., Fischer, A., Vossiek, M.: "A New Technology for Precise Position Measurement-LPM", In: Microwave Symposium Digest, 2004, IEEE MTT-S International, Vol.2, 6-11 June 2004, S.655-658, oder in R. Gierlich, J. Huttner, A. Ziroff, and M. Huemer, "Indoor positioning utilizing fractional-N PLL synthesizer and multi-channel base stations", in Wireless Technology, 2008, EuWiT 2008, European Conference on, 2008, pp. 49-52., oder in S. Roehr, P. Gulden, and M. Vossiek, "Precise Distance and Velocity Measurement for Real Time Locating in Multipath Environments Using a Frequency-Modulated Continuous-Wave Secondary Radar Approach", IEEE Transactions on Microwave Theory and Techniques, vol. 56, pp. 2329-2339, 2008.

Als besonders problematisch hat sich die für die Umsetzung der SAR Verfahren in technischen Produkten benötigte hochgenaue Kenntnis von Aufnahmepositionen, also den Positionen der sogenannten Aperturpunkte, herausgestellt. Eine Wellenlänge beträgt ca. 5 cm bei einem 5,8 GHz-Radarsignal. Zur relativen Vermessung der Apertur wird ein Messfehler deutlich kleiner als eine Wellenlänge der verwendeten Wellenform benötigt, der z.B. kleiner als ein Zehntel der Wellenlänge ist. Dies ist mit technisch einfachen Mitteln, z.B. mit einfachen Odometern, Radsensoren, Drehgebern, sogenannten Encodern, Beschleunigungssensoren etc. insbesondere über größere Bewegungstrajektorien oder längere Messzeiten nicht ausreichend oder nur schwer zu erreichen. Die Berechnung von Entfernungsdaten aus Geschwindigkeits- oder Beschleunigungswerten bringt insbesondere das Problem mit sich, dass sich Messfehler durch eine notwendige Integration von Messgrößen aufintegrieren und die Messfehler daher mit zunehmender Länge eines Integrationsintervalls stark anwachsen.

Allgemein bekannt sind derartige SA-Verfahren auch aus L.J. Cutrona: Kapitel 21 "Synthetic Aperture Radar" in: Merrill I. Skolnik: "Radar Handbook", 2. Aufl. 1990, McGraw Hill Boston, ISBN: 0-07-057913-X, Seiten 21.1-21.23, aus Dean L. Mensa: "High Resolution Radar Cross-Section Imaging", 1991, Artech House, Boston; ISBN: 0-89006-389-3, Seiten: 183 - 199, Kapitel 5.5: "Generalized Focussed Imaging", aus DE 10 2005 000 732 A1 und H. Rudolf et al.: "A parallelogramm shaped arm for improving circular SARs", Geoscience and Remote Sensing Symposium 1999,

**EP 2 270 541 B1**

IGARSS ,99, Hamburg, 28. Juni - 2. Juli 1999, 773562, Bd. 1, Seiten 553 - 555.

Nachteilig von SA-Verfahren ist außerdem, dass SA-Verfahren zumeist sehr rechenaufwändig sind und eine Bildfunktion sowohl in Entfernungsrichtung als auch in Winkelrichtung bzw. in allen Raumkoordinaten des Objektraums berechnet werden muss. Die Berechnung ist auch erforderlich, wenn nur eine Koordinate, beispielsweise nur ein Eintreffwinkel, von Interesse ist.

Beim Einsatz bekannter Methoden zur Wegstreckenbestimmung wird zur Bestimmung von Aperturpunkten eine sehr genaue Positionsmessung benötigt, wobei in nachteilhafter Weise zu fordern ist, dass ein Messfehler der Positionsmessung deutlich kleiner als eine Wellenlänge der einfallenden Welle ist.

Die Aufgabe der Erfindung besteht darin, ein Abbildungsverfahren mit synthetischer Apertur zum Bestimmen eines Einfallswinkels und/oder einer Entfernung eines Sensors zu zumindest einem Objekt oder Transponder im Raum bzw. eine Vorrichtung dazu zu verbessern. Insbesondere soll eine Bestimmung eines Eintreffwinkels unabhängig von einer Entfernung zum Objekt oder Transponder ermöglicht werden.

Diese Aufgabe wird durch ein Abbildungsverfahren mit synthetischer Apertur zum Bestimmen eines Einfallswinkels und/oder einer Entfernung eines Sensors zu zumindest einem Objekt oder Transponder im Raum mit den Merkmalen gemäß Patentanspruch 1 bzw. durch eine Vorrichtung dazu mit den Merkmalen gemäß Patentanspruch 15 gelöst. Vorteilhafte Ausgestaltungen sind Gegenstand von abhängigen Ansprüchen.

Bevorzugt wird demgemäß insbesondere ein Abbildungsverfahren mit synthetischer Apertur zum Bestimmen eines Einfallwinkels und/oder einer Entfernung eines Sensors zu zumindest einem Objekt im Raum, bei dem an einer Anzahl von Aperturpunkten jeweils ein Echoprofil aufgenommen wird, wenn für mehrere als der zumindest eine Einfallswinkel angenommene Winkel je ein Phasenkorrekturwert und/oder je ein Entfernungskorrekturwert berechnet wird, angepasste Profile erzeugt werden auf Basis der Echoprofile durch Anpassen für jeden der angenommen Winkel bzgl. der Phase mit dem Phasenkorrekturwert und/oder durch Verschieben bzgl. der Entfernung mit dem Entfernungskorrekturwert, für die angenommen Winkel aus den angepassten Profilen eine Wahrscheinlichkeitsverteilung gebildet wird und aus der Wahrscheinlichkeitsverteilung ein Wahrscheinlichkeitswert für den Einfallswinkel und/oder für die Entfernung bestimmt wird.

Die Wahrscheinlichkeitsverteilung liefert somit eine Aussage darüber, ob der angenommene Winkel dem tatsächlichen Einfallswinkel entspricht bzw. ob der Entfernungswert der unbekannten tatsächlichen Entfernung entspricht.

Für die angenommen Winkel werden die angepassten Profile vorzugsweise aufsummiert oder integriert. Daraus wird die Wahrscheinlichkeitsverteilung gebildet. Insbesondere werden die Phasenkorrekturwerte und/oder die Entfernungskorrekturwerte basierend auf den Aperturpunkten aus den Positionsdaten der Apertur berechnet.

Gemäß einer ersten Variante wird als das angepasste Profil ein angepasstes Echoprofil erzeugt, indem die Echoprofile für jeden angenommen Winkel bzgl. der Phase mit dem Phasenkorrekturwert anpasst und/oder bzgl. der Entfernung mit dem Entfernungskorrekturwert verschoben werden.

Durch Aufsummieren oder Bestimmen von Maxima können die Wahrscheinlichkeitsfunktion in eindimensionale Wahrscheinlichkeitsfunktionen getrennt werden. Gebildet werden können somit insbesondere unabhängig voneinander Wahrscheinlichkeitsfunktionen für auch nur die Winkelbestimmung oder nur die Entfernungsbestimmung.

Bevorzugt wird aus den Echoprofilen eine Anzahl von Phasengeschwindigkeitsprofilen gebildet und Phasenwinkelgeschwindigkeiten werden als deren Argument bestimmt. Deren Phasenverlauf liefert vorteilhaft Aussagen über Entfernungsänderung bzw. radiale Geschwindigkeit. Die Anzahl kann dabei durch Betrachtung jeweils direkt zueinander benachbarter Echoprofile erfolgen, prinzipiell jedoch auch durch beliebige andere Kombinationen aus nicht zueinander benachbarten Echoprofilen.

Dabei wird bevorzugt für den zumindest einen als Einfallswinkel angenommenen Winkel abhängig von einer relativen Bewegungsgeschwindigkeit zwischen dem wellenbasierten Sensor und dem Objekt und abhängig von einer Phasenvariation je ein komplexer Phasenkorrekturwert als Korrektur über eine Geschwindigkeitsdifferenz berechnet. Dies ermöglicht einen Vergleich von Daten einer Geschwindigkeitssensorik statt von Daten einer Entfernungssensorik. Vorteilhaft werden dadurch die ansonsten hohen Apertursensorik-Anforderungen entschärft.

Bevorzugt werden dabei auch für jeden angenommen Winkel die phasenkorrigierten Phasengeschwindigkeitsprofile zu Geschwindigkeits-Wahrscheinlichkeitsdichtefunktionen aufsummiert oder integriert. Insbesondere deren Realteil liefert eine Aussage darüber, ob der angenommene Winkel dem tatsächlichen Einfallswinkel entspricht.

Bevorzugt wird insbesondere ein derartiges Verfahren, bei dem für den zumindest einen als Einfallswinkel angenommenen Winkel abhängig von einer relativen Beschleunigung zwischen dem wellenbasierten Sensor und dem Objekt und abhängig von einer Phasenvariation je ein komplexer Phasenkorrekturwert als Korrektur über eine Beschleunigungsdifferenz berechnet wird. Dies ermöglicht einen Vergleich von Daten einer Geschwindigkeitssensorik statt von Daten einer Entfernungssensorik. Vorteilhaft werden dadurch die ansonsten hohen Apertursensorik-Anforderungen entschärft. Ermöglicht wird insbesondere eine Bestimmung des Eintreffwinkels auch unabhängig von der Entfernung. Der besondere Vorteil des auf Beschleunigungen basierenden Verfahrens besteht darin, dass es in der Praxis sehr viel einfacher ist, Beschleunigungen mit geringen Driftfehlern zu messen als Geschwindigkeiten oder Entfernungen. Insbesondere lässt sich dieser Vorteil in handgetragenen Funksystemen umsetzen.

Dabei kann aus den Echoprofilen eine Anzahl von Phasenbeschleunigungsprofilen gebildet werden und eine vektorielle Beschleunigung als deren Argument bestimmt werden. Deren Phasenverlauf liefert vorteilhaft Aussagen über Geschwindigkeitsänderungen bzw. radiale Beschleunigungen. Insbesondere werden für jeden angenommen Winkel die phasenkorrigierten Phasenbeschleunigungsprofile zu einer Beschleunigungs-Wahrscheinlichkeitsverteilung aufsummiert oder integriert. Insbesondere deren Realteil liefert eine Aussage darüber, ob der angenommene Winkel dem tatsächlichen Einfallswinkel entspricht.

Dabei kann eine analytischen Berechnung der Extremwerte der eindimensionalen Beschleunigungs-Wahrscheinlichkeitsverteilung oder des Nulldurchgangs der Phase der eindimensionalen Beschleunigungs-Wahrscheinlichkeitsverteilung durchgeführt werden. Dadurch ergibt sich eine erhebliche Reduzierung des Berechnungsaufwandes. Die somit durchführbare Bestimmung von Eintreffwinkel und Entfernung auf der Geschwindigkeits- und Beschleunigungsebene bewirkt vorteilhaft, dass die systematischen, sich mit der Zeit und/oder dem Weg aufakkumulierenden Fehler der Relativsensorik nicht bzw. zumindest weniger ins Gewicht fallen und der Eindeutigkeitsbereich erhöht wird.

Zum Aufnehmen des Echoprofils kann vom Sensor ein Signal zu dem zu zumindest einen Objekt gesendet werden und das zumindest eine Objekt im Raum einen Transponder aufweisen oder als ein Transponder ausgebildet sein, der das Signal empfängt und ein von dem Signal abhängiges modifiziertes Signal als ein vom Objekt kommendes Signal zu dem Sensor zurücksendet, welches als im Sensor empfangenes Signal als das Echoprofil verwendet wird.

Eigenständig vorteilhaft ist eine Vorrichtung mit einem wellenbasierten Sensor zum Aufnehmen einer Abfolge von Echosignalen eines Objektes und mit einer Logik und/oder mit einem auf zumindest ein Programm zugreifenden Prozessor als einer Steuereinrichtung, wobei die Logik und/oder der Prozessor ausgestaltet sind zur Durchführung eines derart vorteilhaften Verfahrens zum Bestimmen eines Einfallwinkels und/oder einer Entfernung eines Sensors zu zumindest einem Objekt im Raum.

Insbesondere ist eine solche Vorrichtung mit einer Speichereinrichtung oder einer Schnittstelle zu einer Speichereinrichtung ausgestattet, wobei in der Speichereinrichtung das Programm gespeichert ist. In für sich bekannter Art und Weise kann eine solche Anordnung als Logik Hardware-Komponenten aufweisen, welche durch geeignete Verdrahtung oder integrierten Aufbau zur Durchführung erforderlicher Programme ausgelegt sind. Umsetzbar ist auch die Verwendung eines Prozessors einschließlich eines Prozessors eines über z.B. eine Schnittstelle angeschlossenen Computers, um ein geeignetes Programm auszuführen, welches zugreifbar gespeichert ist. Möglich sind auch kombinierte Lösungen aus fester Hardware und einem Prozessor. Das Objekt kann einen Transponder aufweisen oder als ein Transponder ausgestaltet sein.

Ein Ausführungsbeispiel wird nachfolgend anhand der Zeichnung näher erläutert. Es zeigen:

Fig. 1    eine beispielhafte Messanordnung und

Fig. 2    einen beispielhaften Verfahrensablauf für ein Abbildungsverfahren mit synthetischer Apertur zum Bestimmen eines Winkels und eines Abstandes eines Objektes,

Fig. 3    einen bevorzugten Verfahrensablauf für ein Abbildungsverfahren zum Bestimmen eines Winkels und eines Abstandes eines Objektes und

Fig. 4    beispielhafte Signalverläufe im Rahmen einer Verfahrensdurchführung dieses bevorzugten Verfahrensablaufs.

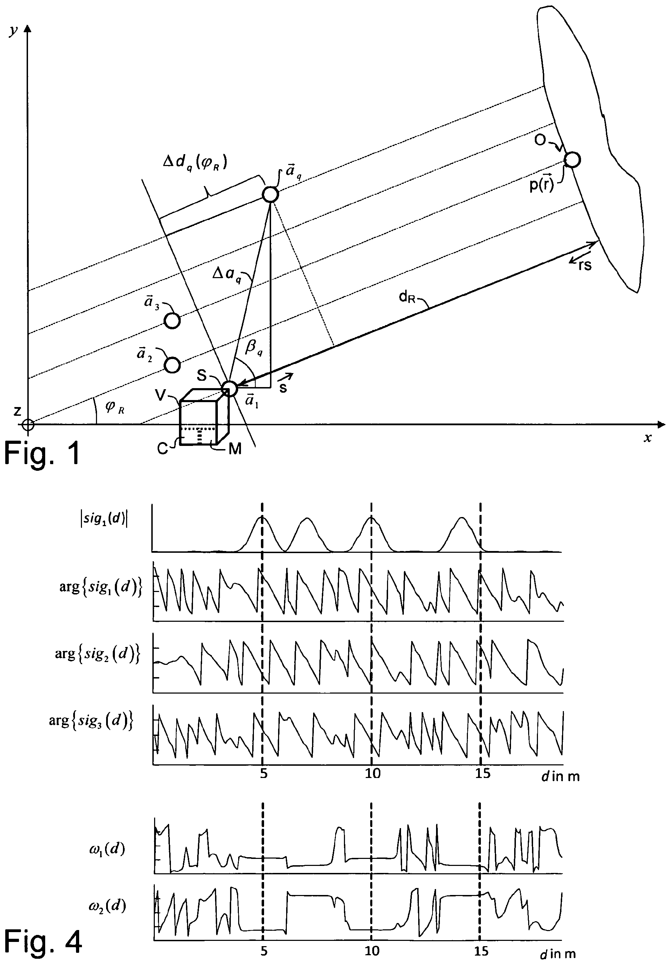

Wie aus Fig. 1 ersichtlich, wird von einer Vorrichtung V mittels einer Signalquelle ein Signal s ausgesendet. Das ausgesendete Signal s wird an einem vom Sensor S entfernten Objekt O reflektiert. Das vom Objekt O reflektierte Signal läuft als ein vom Objekt O kommendes Signal rs in Richtung eines Sensors S. Der Sensor S ist bevorzugt in oder an der Vorrichtung V angeordnet oder ausgebildet, welche auch die Signalquelle umfasst. Bevorzugt ist die Vorrichtung dann sowohl als Sender als auch als Empfänger ausgestaltet, so dass im Rahmen von Toleranzen von einem identischen Ort für Sender und Empfänger ausgegangen werden kann.

Diese Anordnung befindet sich in einem Raum, der durch ein beliebiges Bezugskoordinatensystem aufgespannt sein kann. Lediglich zur Veranschaulichung ist ein kartesisches Koordinatensystem mit zueinander orthogonalen Raumkoordinaten x, y, z dargestellt. Eine imaginäre Verbindungslinie, längs welcher das Signal s zum Objekt O und das vom Objekt O kommende Signal rs bzw. deren Wellen laufen, verläuft dabei unter einem Winkel schräg zur Erstreckung der Raumkoordinaten, wobei hier zur Vereinfachung nur zwei der kartesischen Raumkoordinaten x, y dargestellt sind. Dieser Winkel entspricht somit einem Einfallswinkel $\varphi_R$ der ebenen Wellen in Bezug auf das Bezugskoordinatensystem.

Optional kann das vom Objekt O kommende Signal rs auch von einem aktiv sendenden Transponder kommen, welcher an dem Objekt O angeordnet ist oder welcher als das Objekt O selber an der Position eines solchen Objektes O befindet. Bevorzugt kann das Objekt O somit einen Transponder aufweisen oder als Transponder ausgestaltet sein.

Zur Herleitung einer bevorzugten Verfahrensweise wird beispielhaft von einer klassischen SAR-Apertur ausgegangen, wie sie in Fig. 1 dargestellt ist. Lediglich zur vereinfachten Darstellung und ohne Ausschluss einer Verallgemeinerung auf weitere Anwendungen werden nachfolgende Annahmen gemacht:

Das Objekt O befinde sich an einer Objektposition $p(\vec{r})$ mit $\vec{r} = (x, y)^T$ als radiale Raumkoordinate im kartesischen Koordinatensystem.

Mit dem Sensor S wird eine Anzahl von Q Messungen an Q Aperturpunkten $\vec{a}_q = (x_{aq}, y_{aq})^T$ in Richtung des Objekts O durchgeführt (mit q = 1,2, ... , Q).

Jede der Q Messungen führt als ein Messsignal zu einem Echoprofil $sig_q(d)$ mit beispielsweise im Fall eines einzelnen Objektes O einer Entfernung d als momentaner Objektentfernung des Objekts vom Sensor S. Diese Echoprofile $sig_q(d)$ sollen komplexwertig sein, so dass gilt:

$$sig_q(d) = |sig_q(d)| e^{j \arg\{sig_q(d)\}},$$

wobei $\arg\{sig_q(d)\}$ einen Phasenwinkel $\varphi_q(d) = \arg\{sig_q(d)\}$ des komplexen Signals, d.h. des komplexwertigen Echoprofils $sig_q(d)$ bezeichnet. Verallgemeinert ausgedrückt besteht ein Echoprofil $sig_q(d)$ aus einer Vielzahl empfangener Signale, welche von einem oder mehreren Objekten O über nicht nur einen jeweils direkten Weg, sondern ggfs. auch zeitverzögert eintreffend über indirekte Wege und damit unterschiedliche Signal-Laufstrecken zum Sensor S gelaufen sind.

Wenn die Messsignale reellwertig sind, so sind sie vorzugsweise durch eine Hilbert-Transformation zu komplexwertigen Signalen zu erweitern.

Das Objekt O sei so weit von der synthetischen Apertur entfernt, das man davon ausgehen kann, dass die vom Objekt O emittierte Welle am Ort der Apertur als ebene Welle angenommen werden kann. Die Annahme von ebenen Wellen gilt, wenn ein Abstand $d_R$ zwischen dem Sensor S und dem Objekt O einer Mindestdistanz entspricht, welche aus Sicht einer Vielzahl von Messpositionen einen parallelen Wellenverlauf annähern lässt.

Diese Bedingung kann dann als erfüllt angesehen werden, wenn eine Längenänderung des Übertragungsweges vom Sensor S zum Objekt O, die durch einen lateralen Abstand $\Delta d_q(\varphi_R)$ der Aperturpunkten $\vec{a}_q = (x_{aq}, y_{aq})^T$ quer zur Wellenausbreitungsrichtung hervorgerufen wird, klein gegenüber einer Wellenlänge A des Signals s, rs ist, also wenn gilt:

$$\sqrt{d_R{}^2 + \left(\Delta a_q \cdot \sin\left(\beta_q - \varphi_R\right)\right)^2} - d_R \ll \lambda,$$

wobei $\Delta a_q$ ein tatsächlicher Abstand zweier Aperturpunkten $\vec{a}_1$, $\vec{a}_q$ zueinander ist und $\beta_q$ ein Bezugswinkel für diese Aperturpunkten $\vec{a}_1$, $\vec{a}_q$ zwischen dem kartesischen Koordinatensystem und einem beliebigen Bezugskoordinatensystem ist, in welchem der Einfallswinkel $\varphi_R$ der ebenen Welle betrachtet wird.

Als eine Bezugsentfernung $d_R$ vom Objekt O zur Apertur wird ein Abstand vom ersten Aperturpunkt $\vec{a}_1$ zum Objekt O an der Objektposition $p(\vec{r})$ mit $\vec{r} = (x, y)^T$ gewählt. Im Prinzip ist die Wahl aber beliebig. Es gilt damit

$$d_R = \sqrt{\left(x_{a1} - x\right)^2 + \left(y_{a1} - y\right)^2}.$$

Ausgehend von diesen Annahmen wird eine Rekonstruktionsformel hergeleitet:

Aus der Annahme bzgl. ebener Wellenausbreitung folgt, dass eine Längenänderung als der lateralen Abstand $\varphi d_q(\varphi_R)$ des Übertragungsweges vom Sensor S zum Objekt O aufgrund der Bewegung des Sensors O von dem ersten Aperturpunkt $\vec{a}_1$ zu dem letzten Aperturpunkt $\vec{a}_q$ nicht mehr von der momentanen Entfernung d zum Objekt O, sondern nur noch von den Positionen der Aperturpunkten $\vec{a}_1$, $\vec{a}_q$ und dem Einfallswinkel $\varphi_R$ der ebenen Welle abhängig ist. Es gelten hierbei die folgenden Zusammenhänge:

$$\Delta a_q = \sqrt{\left(x_{aq} - x_{a1}\right)^2 + \left(y_{aq} - y_{a1}\right)^2}$$

$$\Delta d_q(\varphi_R) = \Delta a_q \cdot \cos\left(\beta_q - \varphi_R\right)$$

mit

$$\cos\left(\beta_q\right) = \frac{x_{aq} - x_{o1}}{\Delta a_q} \ .$$

$\Delta a_q$, $\beta_q$ können dabei in mathematisch für sich bekannter Art und Weise mit Methoden zur Wegstreckenbestimmung bestimmt und hergeleitet werden. Es wird nun folgend eine Vereinfachung des Verfahrens zur getrennten Berechnung von Eintreffwinkel und Entfernung aufgezeigt.

Der Einfallswinkel $\varphi_R$ stellt einen zunächst unbekannten Winkel dar, unter dem das Ziel, hier das Objekt O aus Sicht des Sensors S, gesehen wird. Der nun im Folgenden eingeführte angenommene Winkel $\varphi_{RA}$ stellt einen angenommenen Winkel dar, wobei der angenommene Winkel $\varphi_{RA}$ eine willkürliche Annahme darstellt, deren Plausibilität dann im Folgenden getestet wird.

Demgemäß ist somit zunächst der unbekannte Einfallswinkel $\varphi_R$ zu bestimmen. Dies wird dadurch gelöst, dass für mehrere angenommene Winkel $\varphi_{RA}$ Messwerte einer wellenbasierten Sensorik mit Messwerten einer Bewegungssensorik, also den Messewerten einer Positionssensorik oder einer Geschwindigkeitssensorik oder einer Beschleunigungssensorik verrechnet werden und durch diese Algorithmik eine Plausibilität geprüft wird, ob die Winkelhypothese für die angenommenen Winkel $\varphi_{RA}$ zutrifft oder nicht. Nachfolgend werden mehrere vorteilhafte Verfahren zur Lösung dieser Aufgabe vorgestellt.

Basierend auf den genannten Annahmen und unter Zuhilfenahme der geometrischen Zusammenhänge kann nun aus der Anzahl Q aller gemessenen, komplexwertigen Echoprofile $sig_q(d)$ für jeden angenommen Winkel $\varphi_{RA}$ ein Summenprofil gebildet werden. Hierzu wird zuvor in einem Verschiebungs-Schritt jedes Signal bzw. Echoprofil $sig_q(d)$ um einen Betrag eines angenommenen lateralen Abstands $-\Delta d_q(\varphi_{RA})$ verschoben, also verschobene Echoprofile

$$sig_q\left(d, \varphi_{RA}\right)' = sig_q\left(d - \Delta d_q(\varphi_{RA})\right)$$

gebildet.

Auf diesen Verschiebungs-Schritt kann ggf. verzichtet werden, wenn mit B als Messsignal-Bandbreite der Signale s, rs und c als Ausbreitungsgeschwindigkeit der Signale s, rs bzw. der Welle c/B » $\Delta d_q(\varphi_{RA})$ gilt. Dies gilt also, wenn eine Breite einer Echosignal-Hüllkurve eines einzelnen Echopeaks bzw. eines einzelnen Messweges eines derartigen Objektes O deutlich grösser ist, als der angenommene laterale Abstand - $\Delta d_q(\varphi_{RA})$ oder mit anderen Worten deutlich grösser ist als die Verschiebung von Echos des Signals s am Objekt O, die durch die Bewegung des Sensors S von Aperturpunkt $\vec{a}_q$ zu Aperturpunkt $\vec{a}_{q+1}$ hervorgerufen wird, was bei kleinen synthetischen Aperturen mitunter der Fall ist.

In einem nachfolgenden Phasen-Anpassungsschritt werden die Phasen der verschobenen Signale bzw. verschobenen Echoprofile $sig_q(d, \varphi_{RA})$ entsprechend einer veränderten Laufzeit angepasst zu angepassten Echoprofilen

$$sig_q\left(d, \varphi_{RA}\right)'' = sig_q\left(d, \varphi_{RA}\right)' \cdot e^{-j \cdot f\left(\Delta d_q(\varphi_{RA})\right)} \ .$$

Die Funktion $f(\Delta d_q(\varphi_{RA}))$ beschreibt einen linearen Zusammenhang zwischen einer Signalphasenänderung in Abhängigkeit von der momentanen Entfernung $d_q$ des Aperturpunktes $\vec{a}_q$ zum Objekt O. Es gilt

$$f(\Delta d_q(\varphi_{RA})) = const. \cdot \frac{\omega}{c} \Delta d_q(\varphi_{RA}) = const. \cdot \frac{2\pi}{\lambda} \Delta d_q(\varphi_{RA}) \ ,$$

wobei $\omega$ eine Kreismittenfrequenz der verwendeten Wellenform, also der Signale s, rs, ist, c* die Phasengeschwindigkeit und *const.* eine reellwertige Konstante, die vom jeweiligen Messprinzip anhängt. Bei für sich genommen bekannten "time-of-arrival"-Verfahren (deutsch: Ankunftszeit-Verfahren) hat diese Konstante z.B. den Wert 1, für Primärradare, welche die sogenannte "round-trip-time-of-flight" (deutsch: Rundweg-Laufzeit) bestimmen, den Wert 2 und für quasi-phasenkohärente Systeme ergab sich der Wert 4.

Durch Aufsummieren der Q phasenkorrigierten bzw. angepassten Echoprofile $sig_q(d, \varphi_{RA})''$ in einem Summierungs-Schritt kann dann ein Summenprofil $sumsig(d, \varphi_{RA})$ über alle Aperturpunkte $\vec{a}_q$ für jede Raumrichtung bzw. für jeden angenommenen Winkel $\varphi_{RA}$ berechnet werden gemäß:

$$sumsig\left(d,\varphi_{RA}\right)=\sum_{q=1}^{Q}sig_q\left(d,\varphi_{RA}\right)''$$

Es handelt sich hierbei also um eine zweidimensionale Bildfunktion, wobei der Betrag

$$W\left(d,\varphi_{RA}\right)=\left|sumsig\left(d,\varphi_{RA}\right)\right|$$

ein Maß für die Wahrscheinlichkeit $W(d, \varphi_{RA})$ ist, dass sich am Ort $(d, \varphi_{RA})$ ein Objekt O befindet. Wenn sich ein reales Objekt O also an der Position $(d, \varphi_R)$ befindet, so weist die Funktion des Maßes für die Wahrscheinlichkeit $W(d, \varphi_{RA})$ - zumindest wenn es keine anderweitigen Störungen der Messung gegeben hat - ein Maximum an der Position $(d=d_R, \varphi=\varphi_R)$ auf. Durch die Lage der Maxima in der Bildfunktion können also sowohl der unbekannte Einfallswinkel der ebenen Wellen $\varphi_R$ als auch die unbekannte Entfernung $d_R$ von Objekten O oder Transpondern als Objekten O bestimmt werden.

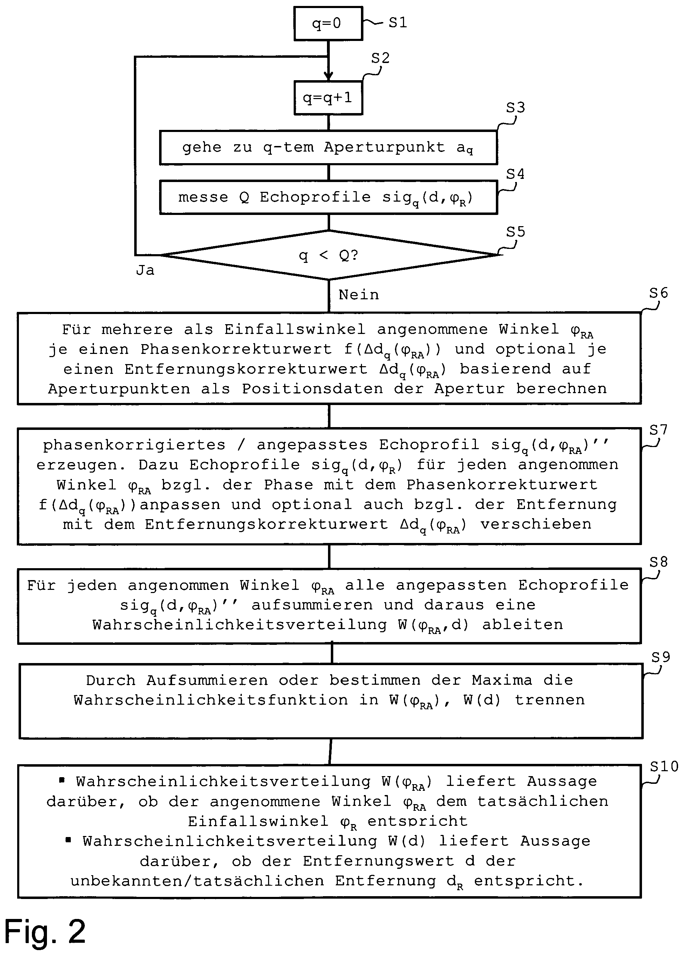

Zusammengefasst lässt sich ein erstes vorteilhaftes Verfahren, das auch in Fig. 2 skizziert ist, wie folgt beschreiben:

In einem ersten Schritt S1 werden Grundparameter eingestellt, wie z.B. das Setzen des Laufindexes q für 1,2, ..., Q auf den Wert 0. In einem zweiten Schritt S2 wird der Wert des Laufindexes q um 1 erhöht.

In einem dritten Schritt S3 wird der Sensor S zu dem Aperturpunkt $\vec{a}_q$ entsprechend dem momentanen Laufindex q bewegt. Es wird im nächsten Schritt S4 eine Messung an diesem Aperturpunkt $\vec{a}_q$ durchgeführt. Solange der Laufindex q kleiner der maximalen bzw. Soll-Anzahl von Aperturpunkten $\vec{a}_q$ ist, wird in einem Schritt S5 zurückgesprungen zum zweiten Schritt S2.

So werden in den ersten Schritt S2 - S5 Messungen an einer Anzahl Q unterschiedlicher Aperturpunkte $\vec{a}_q$ durchgeführt. Dabei werden die Positionen der Aperturpunkte $\vec{a}_q$ über eine Positionssensorik erfasst oder bestimmt, sofern die Positionen der Aperturpunkte $\vec{a}_q$ nicht a priori bekannt sind. Vorliegend wird der Begriff Aperturpunkte $\vec{a}_q$ synonym zu Position einer Messung der einzelnen Punkte der Apertur verwendet.

Jede der Q Messungen führt zu einem Echoprofil $sig_q(d, \varphi_R)$ bzw. wird als ein solches gespeichert.

Für mehrere als Einfallswinkel angenommene Winkel $\varphi_{RA}$ wird in einem nachfolgenden Schritt S6 jeweils ein Entfernungskorrekturwert $\Delta d_q(\varphi_{RA})$ und ein Phasenkorrekturwert $f(\Delta d_q(\varphi_{RA}))$ basierend auf den Aperturpunktdaten, d.h. den Positionsdaten der Apertur, welche z.B. aus Daten einer Positionssensorik berechnet werden. Optional wird der gesamte Winkelbereich gerastert und für die Winkel $\varphi_{RA}$ berechnet.

Die Wahl der angenommenen Winkel $\varphi_{RA}$ kann beliebig sein, wobei bevorzugt über einen interessierenden Raumbereich ein äquidistanter Winkelabstand verwendet wird.

Jedes Echoprofil $sig_q(d, \varphi_R)$ wird für jeden angenommenen Winkel $\varphi_{RA}$ zumindest bzgl. der Phase mit dem Phasenkorrekturwert $f(\Delta d_q(\varphi_{RA}))$ angepasst und, falls notwendig, auch bzgl. der Entfernung mit dem Entfernungskorrekturwert $\Delta d_q(\varphi_{RA})$ verschoben und so in einem nachfolgenden Schritt S7 ein phasenkorrigiertes bzw. angepasstes Echoprofil $sig_q(d, \varphi_{RA})''$ gebildet.

Für jeden der als Einfallswinkel angenommen Winkel $\varphi_{RA}$ werden alle so in einem nachfolgenden Schritt S8 phasenkorrigierten Echoprofile $sig_q(d, \varphi_{RA})''$ aufsummiert und daraus eine Bildfunktion bzw. eine Wahrscheinlichkeitsverteilung abgeleitet, die Aussagen darüber liefert, ob der angenommene Winkel $\varphi_{RA}$ dem tatsächlichen Einfallswinkel $\varphi_R$ entspricht oder welcher Entfernungswert d der unbekannten Entfernung $d_R$ entspricht.

Geht man davon aus, dass sich nicht zwei Objekte O in derselben Entfernung oder unter demselben Einfallswinkel $\varphi_R$ in der Objektszene befinden, so kann in einem nachfolgenden Schritt S9 diese zweidimensionale Funktion in zwei eindimensionale Funktionen aufgeteilt werden zu

$$W(\varphi_{RA}) = \max_d \left| sumsig(d, \varphi_{RA}) \right|$$

oder auch

$$W(\varphi_{RA}) = \left| \int_{d=0}^{d_{max}} sumsig(d, \varphi_{RA}) \, dd \right|$$

als Maß für die Wahrscheinlichkeit $W(\varphi_{RA})$ des Einfallswinkels $\varphi_R$ bzw.

$$W(d) = \max_{\varphi_{RA}} \left| sumsig(d, \varphi_{RA}) \right|$$

oder auch

$$W(d) = \left| \int_{\varphi_R=0}^{360} sumsig(d, \varphi_{RA}) \, d\varphi_{RA} \right|$$

als Maß für die Wahrscheinlichkeit $W(d)$ für die momentane Entfernung d zum Objekt O. In einem nachfolgenden Schritt S10 werden damit der Einfallswinkels $\varphi_R$ bzw. die momentane Entfernung d bestimmt.

Geht man nun davon aus, dass es sich bei den für die Entfernung gemessenen Echoprofilen $sig_q(d)$ und daher auch bei dem Summenprofil $sumsig(d, \varphi_{RA})$ um diskrete Abtastsignale handelt, geht das Integral in einen einfache Summe über. Unter der Annahme, dass die Echoprofile $sig_q(d, \varphi_R)$ jeweils in dem Entfernungsbereich von z.B. *0* bis $d_{max}$ durch *N* Abtastpunkte dargestellt werden, gilt

$$W(\varphi_{RA}) = \max_{n=1...N} \left| sumsig(d_n, \varphi_{RA}) \right|$$

oder auch

$$W(\varphi_{RA}) = \left| \sum_{n=1}^{N} sumsig(d_n, \varphi_{RA}) \right| = \left| \sum_{n=1}^{N} \sum_{q=1}^{Q} sig_q \left( d_n - \Delta d_q(\varphi_{RA}) \right) e^{-j \cdot f\left(\Delta d_q(\varphi_{RA})\right)} \right|.$$

Diese erstellte Formulierung ist besonders dann vorteilhaft, wenn wie z.B. bei RFID Systemen eine eineindeutige Bestimmung der Entfernung $d_n$ auf Grund eines geringen Eindeutigkeitsbereichs der Trägerwelle nicht möglich ist. Es ist dann mit dem beschriebenen Verfahren jedoch möglich, nur den Winkel zu schätzen, unter dem man das RFID-Tag (Hochfrequenz-Identifikations-Kennzeichnung) als Sendepunkt für das vom Objekt O kommendes Signal rs sieht, ohne die genaue Entfernung berechnen zu müssen.

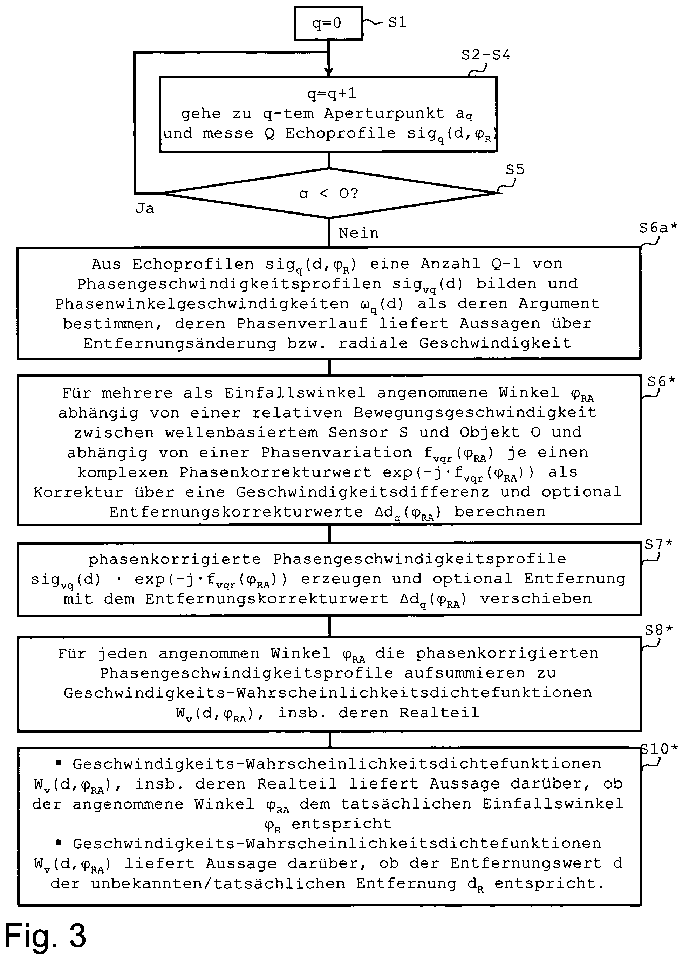

Fig. 3 zeigt einen besonders bevorzugten Verfahrensablauf, bei dem aus den Echoprofilen $sig_q(d)$ Phasengeschwindigkeitsprofile $sig_{vq}(d)$ gebildet und ausgewertet werden. Dabei sind die ersten Verfahrensschritte S1 bis S5 gleich dem Verfahrensablauf gemäß Fig. 2.

Unter der Annahme, dass der durch den angenommenen Winkel $\varphi_{RA}$ abgedeckte Winkelbereich in *K* diskrete Winkelwerte $\varphi_{RAK}$ unterteilt ist, gilt:

$$W(d) = \max_{k=1...K} \left| sumsig(d, \varphi_{RAk}) \right|$$

oder auch

$$W(d) = \left| \sum_{k=1}^{K} sumsig(d, \varphi_{Rk}) \right|.$$

Jedoch wird zumindest bei Anwendung der bevorzugten gemäß Fig. 2 zur Bestimmung der Aperturpunkten vorliegend keine sehr genaue Positionsmessung benötigt. Insbesondere ist nicht zwingend zu fordern, dass der Messfehler der Positionsmessung deutlich kleiner als die Wellenlänge der einfallenden Welle sind.

Nun ist es möglich, aus der Anzahl Q von Echoprofilen $sig_q(d)$, deren Phasenverlauf üblicherweise eine lineare Funktion der Entfernung d ist, eine Anzahl Q-1 von Phasengeschwindigkeitsprofilen $sig_{vq}(d)$ zu bilden, deren Phasenverlauf Aussagen über die Entfernungsänderung, d.h. über die radiale Geschwindigkeit liefert. Die Phasengeschwindigkeitsprofile $sig_{vq}(d)$ werden in einem Schritt S6a* gebildet, indem von zwei Echoprofilen $sig_q(d)$, $sig_{q-1}(d)$ für jeden Phasenwert die Differenz gebildet und mit der Amplitude des Entfernungswertes multipliziert wird. Bei den beiden Echoprofilen $sig_q(d)$, $sig_{q-1}(d)$ handelt es sich vorzugsweise, aber nicht notwendig um zwei zueinander benachbarten Echoprofilen $sig_q(d)$, $sig_{q-1}(d)$. Es können dafür beliebige Differenzpaare gebildet werden, im folgenden werden für die Ausführung beispielhaft die benachbarten verwendet. Eine Phasenwinkelgeschwindigkeit $\omega_q(d)$ oder mit anderen Worten das Argument $arg\{sig_{vq}(d)\}$ der Phasengeschwindigkeitsprofile $sig_{vq}(d)$ ergibt sich zu:

$$\omega_q(d) = \frac{\varphi_q(d) - \varphi_{q-1}(d)}{\Delta T_q},$$

wobei $\Delta T_q$ ein Zeitintervall darstellt, das zwischen einer Messung mit dem Index q-1 und einer Messung mit dem Index q an den beiden Aperturpunkten $\vec{a}_{q-1}$ bzw. $\vec{a}_q$ vergangen ist. Wird in konstanten Zeitabständen gemessen, so ist $\Delta T_q$ konstant.

Die Phasengeschwindigkeitsprofile $sig_{vq}(d)$ können vorzugsweise wie folgt berechnet werden:

$$h_{vq}(d) = sig_q(d) \cdot sig_{q-1}(d)^*,$$

wobei sich hierbei die Phasenwinkelgeschwindigkeit ergibt zu

$$\omega_q(d) = \frac{arg\{h_{vq}(d)\}}{\Delta T_q}$$

und die Phasengeschwindigkeitsprofile $sig_{vq}(d)$ sind definiert als

$$sig_{vq}(d) = |h_{vq}(d)| \cdot e^{j \cdot \omega_q(d)}.$$

Um das Quadrieren der Signalamplituden zu vermeiden, könnte man auch

$$sig_{vq}(d) = \sqrt{|h_{vq}(d)|} \cdot e^{j \cdot \omega_q(d)}$$

oder

$$sig_{vq}(d) = |sig_q(d)| \cdot e^{j \cdot \omega_q(d)}$$

oder

$$sig_{v_q}(d) = \left| sig_{q-1}(d) \right| \cdot e^{j \cdot \omega_q(d)}$$

oder

$$sig_{v_q}(d) = \frac{1}{2}\left( \left| sig_{q-1}(d) \right| + \left| sig_{q-1}(d) \right| \right) \cdot e^{j \cdot e^{j \cdot \omega_q(d)}}$$

bilden. Der konkrete Verlauf der Beträge ist für die weitere Verarbeitung aber nicht entscheidend, so dass auch andere Kombinationen oder sogar konstante bzw. willkürlich angenommene Beträge verwendbar wären. Die fünf zuvor dargestellten Varianten sind aber physikalisch sinnvoll und daher als bevorzugte Ausführungsvariante anzusehen. Vorteilhaft soll nun eine holographische Rekonstruktion an Hand der Phasengeschwindigkeitsprofile erfolgen, bei der es nun nicht mehr erforderlich ist, die Position der Aperturpunkte $\vec{a}_q$ zu bestimmen, sondern bei der es ausreicht, die relative Bewegungsgeschwindigkeit zwischen wellenbasiertem Sensor S und Objekt O zu messen. Diese bevorzugte Modifikation des zuvor ausgeführten und bereits vorteilhaften Verfahrens stellt eine erhebliche Vereinfachung in der praktischen Realisierung von synthetischen Aperturen dar, da es in der Praxis sehr viel einfacher ist , Geschwindigkeiten mit geringen Driftfehlern zu messen als Entfernungen.

Der Sensor S und das Objekt O bewegen sich nun relativ zueinander mit der vektoriellen Geschwindigkeit $\vec{v}_q$ = $|\vec{v}_q| \cdot e^{j\Delta\beta q}$ vom q-1-ten Aperturpunkt $\vec{a}_{q-1}$ zum q-ten Aperturpunkt $\vec{a}_q$ mit q=2, ... Q, wobei ein Winkel $\Delta\beta_q$ den Winkel der Bewegung relativ zum gewählten Bezugskoordinatensystem zwischen 2 benachbarten Aperturpunkten $\vec{a}_{q-1}$ zum q-ten Aperturpunkt $\vec{a}_q$ beschreibt, also:

$$\cos\left(\Delta\beta_q\right) = \frac{x_{aq} - x_{aq-1}}{\left| \vec{a}_q - \vec{a}_{q-1} \right|}.$$

Die vektorielle Geschwindigkeit $\vec{v}_q$ kann von einem Sensorsystem erfasst werden, z.B. der Geschwindigkeitsbetrag durch einen Radencoder, und die Richtung mittels Lenkwinkelsensor bei einem Fahrzeug. Eine Geschwindigkeitskomponente $v_{qr}$ in Richtung des Einfallswinkels $\varphi_R$ stellt nun die Größe dar, die sich in den Phasengeschwindigkeitsprofilen $sig_{vq}(d)$ in der Phasenwinkelgeschwindigkeit $\omega_q(d)$ in charakteristischer Weise niederschlägt. Es gilt für die radiale Geschwindigkeitskomponente

$$v_{qr} = \left| \vec{v}_q \right| \cdot \cos\left(\Delta\beta_q - \varphi_R\right) \qquad \texttt{mit} \qquad \Delta\beta_q = \arg\left\{\vec{v}_q\right\}.$$

Eine Phasenvariation $f_{vqr}(\varphi_{RA})$, d.h. die aufgrund der Messung von der Geschwindigkeit $v_{qr}$ je nach angenommenen Einfallwinkel $\varphi_{RA}$ zu erwartende Phasenwinkelgeschwindigkeit $\omega_q(d)$ in den Phasengeschwindigkeitsprofilen $sig_{vq}(d)$, ist über eine reellwertige Konstante $const_v$ mit der radialen Geschwindigkeit $v_{qr}$ verknüpft und es gilt für die Phasenvariation $f_{vqr}(\varphi_{RA})$:

$$\texttt{f}_{\texttt{vqr}}(\varphi_{\texttt{RA}}) = \texttt{const}_{\texttt{v}} \cdot \texttt{v}_{\texttt{qr}}.$$

Die Konstante $const_v$ hängt von der Wellenlänge $\lambda$ und dem jeweilig gewählten Messprinzip ab. Bei Verwendung eines Primärradars oder eines Ultraschall-Impuls-Echo-Systems gilt z.B. $const_v = \dfrac{4\pi}{\lambda}$ analog zum vorherigen Zusammenhang zur Formel der Ortsänderung. In einem Schritt S6* werden entsprechend eine entsprechende Phasen-

variation fvqr($\varphi$RA) und daraus ein komplexer Phasenkorrekturwert exp(-j·fvqr($\varphi$RA)) bestimmt.

Basierend auf diesen Phasengeschwindigkeitsprofilen $sig_{vq}(d)$ kann nun in Schritten S7* und S8* eine neue bevorzugte Rekonstruktionsvorschrift zur Berechnung einer Bildfunktion bzw. Wahrscheinlichkeitsdichtefunktion $W_v$(d, $\varphi_{RA}$) wie folgt definiert werden:

$$W_v\left(d,\varphi_{RA}\right)=\sum_{q=1}^{Q} sig_{vq}\left(d\right)\cdot e^{-j\cdot f_{vqr}\left(\varphi_{RA}\right)}$$

.

Diese Geschwindigkeits-Wahrscheinlichkeitsdichtefunktion $W_v$(d, $\varphi_{RA}$) ist nun aber nicht in jedem Fall so einfach zu interpretieren, wie die Wahrscheinlichkeitsdichtefunktion die mit Hilfe der Echoprofile definiert wurde.

In weiteren Schritten S10* werden dann die tatsächlichen Eintreffwinkel bestimmt, wie folgt.

Zur Rekonstruktion wird nun für jeden angenommenen Winkel $\varphi_{RA}$ jedes Phasengeschwindigkeitsprofil $sig_{vq}(d)$ mit dem jeweiligen komplexen Phasenkorrekturwert exp(-j·$f_{vqr}(\varphi_{RA})$) multipliziert und dann werden alle Q-1 derart phasenkorrigierten Phasengeschwindigkeitsprofile aufsummiert. Der komplexe Phasenkorrekturwert ergibt sich, wie zuvor dargestellt wurde, aus der gemessenen Geschwindigkeit v und dem angenommenen Winkel $\varphi_{RA}$ relativ zum gewählten Bezugskoordinatensystem. Falls der angenommene Winkel $\varphi_{RA}$ mit dem tatsächlichen Winkel zum Objekt O übereinstimmt, so hebt der komplexe Phasenkorrekturwert jeweils gerade den Phasenwert der Phasengeschwindigkeitsprofile $sig_{vq}(d)$, also die Phasenwinkelgeschwindigkeit $\omega_q(d)$, auf, so dass sich alle Q komplexen Werte in der Summe für die jeweilige Entfernung d konstruktiv überlagern. Insbesondere ist in diesem Fall der Phasenwinkel des resultierenden komplexen Zeigers in Form der Geschwindigkeits-Wahrscheinlichkeitsdichtefunktion $W_v$(d, $\varphi_{RA}$) - zumindest wenn die Geschwindigkeitsmessung exakt ist - identisch Null. Der Imaginärteil von der Geschwindigkeits-Wahrscheinlichkeitsdichtefunktion $W_v$(d, $\varphi_{RA}$) wäre daher in diesem Fall Null und der Realteil maximal.

Stimmt jedoch der angenommene Winkel $\varphi_{RA}$ mit dem tatsächlichen Einfallswinkel $\varphi_R$ nicht überein, so sind die Phasen der Q komplexen Werte in der Summe für die jeweilige Entfernung d bei krummlinigen Aperturen willkürlich verteilt. Daher überlagern sich die Zeiger bzw. komplexen Werte in Form der Geschwindigkeits-Wahrscheinlichkeitsdichtefunktion $W_v$(d, $\varphi_{RA}$) nicht konstruktiv und der Betrag der Summe ist wesentlich kleiner als bei der konstruktiven Überlagerung. Bei geraden Aperturen ist zumindest der Phasenwinkel der Geschwindigkeits-Wahrscheinlichkeitsdichtefunktion $W_v$(d, $\varphi_{RA}$) nicht gleich Null und der Realteil der Summe der Geschwindigkeits-Wahrscheinlichkeitsdichtefunktionen $W_v$(d, $\varphi_{RA}$) ist wesentlich kleiner als in dem Fall, in dem der angenommene Winkel mit dem tatsächlichen Winkel zum Objekt übereinstimmt.

Zur Berechnung einer Bildfunktion wird daher bevorzugt der Realteil der Geschwindigkeits-Wahrscheinlichkeitsdichtefunktionen $W_v$(d, $\varphi_{RA}$) herangezogen:

$$W_v\left(d,\varphi_{RA}\right)=\mathrm{Re}\left\{\sum_{q=1}^{Q} sig_{vq}\left(d\right)\cdot e^{-j\cdot f_{vqr}\left(\varphi_{RA}\right)}\right\}$$

Eine andere Ausführung der Auswertung kann darin bestehen, dass für eine bestimmte Entfernung $d_0$ die Winkelfunktion

$$W_v\left(\varphi_{RA}\right)\big|_{d=d_0}=\sum_{q=1}^{Q} sig_{vq}\left(d_0\right)\cdot e^{-j\cdot f_{vqr}\left(\varphi_{RA}\right)}$$

berechnet wird und in der Funktion $W_v(\varphi_{RA})|_{d=d_0}$ der angenommene Winkel $\varphi_{RA}$ bestimmt, für den der Phasenwinkel, also das Argument von $W_v(\varphi_{RA})|_{d=d_0}$ minimal wird und somit

$$\arg\left\{W_v\left(\varphi_{RA}\right)\big|_{d=d_0}\right\}=\min$$

gilt. In diesem Fall sollte, im Sinne der Wahrscheinlichkeit, der angenommene Winkel $\varphi_{RA}$ dem tatsächlichen Einfallswinkel $\varphi_R$ entsprechen.

Eine sinnvolle Annahme für die Entfernung $d_0$ kann häufig sehr einfach dadurch bestimmt werden, dass in zumindest einem der aufgenommen bzw. bestimmten Entfernungs- oder Geschwindigkeitsprofile die Betragsmaxima bestimmt werden, die ja bestimmten Objektentfernungen zugeordnet sind.

In Fig. 4 sind die Zusammenhänge leicht zu erkennen. Zu sehen ist hier über der Distanz in m aufgetragen ein Betrag eines beispielhaften ersten Echoprofils $sig_1(d)$ mit 4 Echos d.h. 4 Objekten O bzw. 4 Transpondern in der ersten Zeile, wobei die Messung an einem ersten Aperturpunkt $\vec{a}_1$ durchgeführt wurde. Die Entfernungen d der Objekte O vom Sensor S sind leicht anhand der Lage der Maxima im Betrag des Echoprofils zu erkennen.

In der zweiten Zeile ist die Phase $arg\{sig_1(d)\}$ des ersten Echoprofils $sig_1(d)$ dargestellt. In der dritten und der vierten Zeile sind die Phasen $arg\{sig_2(d)\}$, $arg\{sig_3(d)\}$ eines an einem zweiten Aperturpunkt $\vec{a}_2$ aufgenommenen zweiten Echoprofils $sig_2(d)$ bzw. eines an einem dritten Aperturpunkt $\vec{a}_3$ aufgenommenen dritten Echoprofils $sig_3(d)$ dargestellt.

Aus den Phasen der Echoprofile $sig(d)$ können dann in beschriebener Art und Weise die Phasenwinkelgeschwindigkeiten $\omega_1(d)$, $\omega_2(d)$ abgeleitet werden. Die in der fünften Zeile dargestellte Phasenwinkelgeschwindigkeit $\omega_1(d)$ ist aus der Differenz der Phasen von dem ersten Echoprofil $sig_1(d)$ und dem zweiten Echoprofil $sig_2(d)$ bestimmt. Die in der sechsten Zeile dargestellte Phasenwinkelgeschwindigkeit $\omega_2(d)$ ist aus der Differenz der Phasen von dem zweiten Echoprofil $sig_2(d)$ und dem dritten Echoprofil $sig_3(d)$ bestimmt.

Eine in der Praxis äußerst vorteilhafte Eigenschaft der bestimmten Phasenwinkelgeschwindigkeiten $\omega_1(d)$, $\omega_2(d)$ besteht darin, dass sie unter der gesamten Echobreite nahezu konstant sind, wie in Fig. 4 gut erkennbar ist. Es reicht also eine sehr grobe bzw. sehr ungenaue Detektion einer ObjektEntfernung $d_0$ um trotzdem eine korrekte Einfallswinkelbestimmung nach dem dargestellten Verfahren vornehmen zu können. Die Winkelmessgenauigkeit ist also nicht direkt mit der Entfernungsmessgenauigkeit verknüpft.

Die zweidimensionale Funktion der Geschwindigkeits-Wahrscheinlichkeitsdichtefunktionen $W_v(d, \varphi_{RA})$ kann in eine eindimensionale Funktion überführt werden, wenn a) entweder eine krummlinige Apertur vorliegt und davon ausgegangen werden kann, dass sich nicht zwei Objekte O in derselben Entfernung d oder unter demselben tatsächlichen Einfallswinkel $\varphi_R$ in der Objektszene befinden, oder wenn b) sich nur ein Objekt O im Aufnahmebereich befindet.

Unter der Annahme, dass die Phasengeschwindigkeitsprofile $sig_{vq}(d)$ jeweils in dem Entfernungsbereich von z.B. 0 bis $d_{max}$ durch N Abtastpunkte dargestellt werden, lässt sich diese eindimensionale Wahrscheinlichkeitsfunktion $W_v(\varphi_{RA})$ vorzugsweise berechnen gemäß

$$W_v\left(\varphi_{RA}\right) = \sum_{n=1}^{N} \sum_{q=1}^{Q} sig_{vq}\left(d_n\right) \cdot e^{-j \cdot f_{vqr}(\varphi_{RA})}$$

.

Der bzw. die Einfallswinkel $\varphi_R$, in denen sich tatsächlich Objekte O befinden, sind dadurch zu erkennen, dass der Realteil der eindimensionalen Wahrscheinlichkeitsfunktion $W_v(\varphi_{RA})$ maximal wird bzw. der Phasenwinkel bei einem gleichzeitig großen Betrag von der eindimensionalen Wahrscheinlichkeitsfunktion $W_v(\varphi_{RA})$ minimal wird.

In der Praxis können die Geschwindigkeit $|\vec{v}_q|$ des Sensors S und der Winkel $\Delta\beta_q$ der Bewegung z.B. mit einem Odometer und einem Winkelsensor, wie etwa einem Lenkwinkelsensor, einem Kompass oder einem Gyroskop, bestimmt werden. Bei einer relativ und nicht absolut messenden Winkelsensorik muss der Winkelwert sukzessive von Aperturpunkt $\vec{a}_q$ zu Aperturpunkt $\vec{a}_{q+1}$ nachgeführt werden. Bei einer absolut messenden Winkelsensorik reicht es, den jeweiligen Winkelwert auf einen definierten gemeinsamen Ausgangspunkt, wie beispielsweise die Winkelstellung bei dem ersten Aperturpunkt $\vec{a}_1$ zu beziehen.

Vorteilhaft umsetzbar ist auch die reine Schätzung der Winkellage zu Systemen in unbekanntem oder nicht eineindeutigem Abstand, für die nur die Geschwindigkeit bekannt sein muss.

Handelt es sich bei den bewegten Objekten O z.B. um Fahrzeuge, so kann sehr oft, z.B. wenn der Wendekreis der Fahrzeuge groß gegenüber der Apertur ist, der Winkel $\Delta\beta_q$ der Bewegung als konstant angenommen werden und muss daher erst gar nicht gemessen werden. Das Bezugskoordinatensystem würde hierbei sinnvollerweise durch die normale Abrollrichtung der Räder festgelegt. Z.B. legt man die x-Achse des Bezugskoordinatensystems in Fahrzeug-Rollrichtung fest.

Je nach Fahrzeug kann es auch sinnvoll sein, die Geschwindigkeit $|\vec{v}_q|$ während der Q Messungen als konstant anzunehmen, wie nachfolgend beschrieben ist.

In Erweiterung der bisherigen Ausführungen können aus der Anzahl Q der Echoprofilen bzw. der Anzahl Q-1 der Phasengeschwindigkeitsprofile, z.B. eine Anzahl Q-2 Phasenbeschleunigungsprofile $sig_{aq}(d)$ gebildet werden. Die Phasenbeschleunigungsprofile $sig_{aq}(d)$ liefern Aussagen über die Geschwindigkeitsänderung, d.h. über die über die absolute radiale Beschleunigung des Sensors S. Die Phasenwinkelbeschleunigung $\alpha_q(d)$ als das Argument der Phasenbeschleunigungsprofile $sig_{aq}(d)$ ergibt sich zu:

$$\alpha_q(d) = \frac{\omega_q(d) - \omega_{q-1}(d)}{\Delta T_q}$$

Die Phasenbeschleunigungsprofile $\text{sig}_{aq}(d)$ können, analog zur vorangegangenen Darstellung für die Phasengeschwindigkeitsprofile $\text{sig}_{vq}(d)$, vorzugsweise wie folgt berechnet werden:

$$h_{aq}(d) = sig_{vq}(d) \cdot sig_{vq-1}(d)^{*}$$

und

$$sig_{aq}(d) = \left| h_{aq}(d) \right| \cdot e^{j \cdot \alpha_q(d)}$$

mit der Phasenwinkelbeschleunigung:

$$\alpha_q(d) = \frac{\arg\left\{ h_{aq}(d) \right\}}{\Delta T_q} \ .$$

Die Phasenbeschleunigungsprofile $\text{sig}_{aq}(d)$ können natürlich genauso wie die Phasengeschwindigkeitsprofile $\text{sig}_{vq}(d)$ bzgl. des Betrages unquadriert aufgestellt werden und auch die sonstigen Bemerkungen zu den Beträgen gelten in gleicher Weise.

Der Sensor S und das Objekt O bewegen sich nun relativ mit der vektoriellen Beschleunigung $\vec{a}_q = |\vec{aq}| \cdot e^{j\Delta\beta q}$ zueinander, wobei der Winkel $\Delta\beta_q$ den Winkel des Beschleunigungsvektors relativ zum gewählten Bezugskoordinatensystem beschreibt.

Die vektorielle Beschleunigung $\vec{a}_q$ kann z.B. von einem Sensorsystem erfasst werden, z.B. durch Micro-Electro-Mechanical Systems (MEMS), Beschleunigungssensoren und Gyroskope. Die Beschleunigungskomponente $a_{qr}$ in Richtung des Einfallswinkels $\varphi_R$ stellt nun die Größe dar, die sich in den Phasenbeschleunigungsprofilen $\text{sig}_{aq}(d)$ in der Phasenwinkelbeschleunigung $\alpha_q(d)$ in charakteristischer Weise niederschlägt. Es gilt für die radiale Beschleunigungskomponente

$$a_{qr} = \left| \vec{a}_q \right| \cdot \cos\left( \Delta\beta_q - \varphi_R \right) \qquad \text{mit} \qquad \Delta\beta_q = \arg\left\{ \vec{a}_q \right\} .$$

Eine Phasenvariation $f_{aqr}(\varphi_{RA})$, d.h. die aufgrund der Messung von der Beschleunigung $\vec{a}_q$ je nach angenommenem Einfallwinkel $\varphi_{RA}$ zu erwartende Phasenwinkelgeschwindigkeit in den Phasengeschwindigkeitsprofilen $\text{sig}_{vq}(d)$, ist über eine reellwertige Konstante $\text{const}_a$ mit der radialen Beschleunigung $a_{qr}$ verknüpft und es gilt

$$f_{aqr}(\varphi_{RA}) = \text{const}_a \cdot a_{qr}$$

Die Konstante $\textbf{const}_a$ hängt von der Wellenlänge A und dem jeweilig gewählten Messprinzip ab, dies analog zu den Ausführungen bei der Geschwindigkeit und Entfernung.

Basierend auf diesen Phasenbeschleunigungsprofilen $\text{sig}_{aq}(d)$ kann nun eine weitere Rekonstruktionsvorschrift wie folgt definiert werden:

$$W_a\left(d,\varphi_{RA}\right)=\sum_{q=1}^{Q}sig_{aq}\left(d\right)\cdot e^{-j\cdot f_{aqr}\left(\varphi_{RA}\right)}$$

.

Die Auswertung dieser Bildfunktion bzw. Beschleunigungs-Wahrscheinlichkeitsverteilung $W_a(d, \varphi_{RA})$ erfolgt inklusive aller Auswertungsvarianten analog zur Auswertung der Bildfunktion, die mit Hilfe der Phasengeschwindigkeitsprofile bestimmt wurde.

Zur Rekonstruktion wird also für jeden angenommenen Winkel $\varphi_{RA}$ jedes Phasenbeschleunigungsprofil $sig_{aq}(d)$ mit dem jeweiligen komplexen Phasenkorrekturwert $exp(-j\,f_{aqr}(\varphi_{RA}))$ multipliziert und dann werden alle Q-2 derart phasenkorrigierten Phasenbeschleunigungsprofile aufsummiert.

In analoger Weise, wie es für die Entfernungsholographie oben schon ausgeführt ist, kann die zweidimensionale Funktion als Beschleunigungs-Wahrscheinlichkeitsverteilung $W_a(d, \varphi_{RA})$ in zwei eindimensionale Funktionen $W_a(\varphi_{RA})$ oder $W_a(d)$ aufgeteilt werden.

Besonders vorteilhaft ist auch hier anwendbar, dass die Phasenwinkelbeschleunigung $\alpha_q(d)$, genau wie schon in Fig. 4 für die Phasenwinkelgeschwindigkeiten $\omega_q(d)$ gezeigt, unter der gesamten Echobreite in einem Phasenbeschleunigungsprofile $sig_{aq}(d)$ nahezu konstant ist. Folglich bietet es sich auch hier an, die Rekonstruktionsformel nicht für alle Entfernungen d anzuwenden sondern nur gezielt für Entfernungen, in denen in den Beträgen der Profile Echos / Objekte erkennbar sind. Es folgt für diesen Fall die vereinfachte Funktion zur Winkelschätzung als eindimensionale Beschleunigungs-Wahrscheinlichkeitsverteilung gemäß:

$$W_a\left(\varphi_{RA}\right)\Big|_{d=d_0}=\sum_{q=1}^{Q}sig_{aq}\left(d_0\right)\cdot e^{-j\cdot f_{aqr}\left(\varphi_{RA}\right)}$$

.

Es sei an dieser Stelle darauf hingewiesen, dass die eindimensionale Beschleunigungs-Wahrscheinlichkeitsverteilung $W_a(\varphi_{RA})|_{d=d0}$ häufig einen systematischen, insbesondere einen sinusförmigen Verlauf aufweist. In diesem Fall ist es möglich, nach Berechnung weniger Werte von der eindimensionalen Beschleunigungs-Wahrscheinlichkeitsverteilung $W_a(\varphi_{RA})|_{d=d0}$ den Wert des Winkels $\varphi_{RA}$ analytisch zu bestimmen, an dem der Betrag oder Realteil von der eindimensionalen Beschleunigungs-Wahrscheinlichkeitsverteilung $W_a(\varphi_{RA})|_{d=d0}$ maximal wird bzw. an dem der Phasenwinkel, also das Argument der eindimensionalen Beschleunigungs-Wahrscheinlichkeitsverteilung $W_a(\varphi_{RA})|_{d=d0}$ gleich Null wird, also an dem der angenommene Winkel $\varphi_{RA}$ dem tatsächlichen Winkel $\varphi_R$ entspricht. Es ist dann also nicht mehr nötig $\varphi_{RA}$ schrittweise über den gesamten Winkelbereich zu variieren und die genannten Extremwerte der eindimensionalen Beschleunigungs-Wahrscheinlichkeitsverteilung $W_a(\varphi_{RA})|_{d=d0}$ bzw. den Nulldurchgang der Phase der eindimensionalen Beschleunigungs-Wahrscheinlichkeitsverteilung $W_a(\varphi_{RA})|_{d=d0}$ durch eine Suchfunktion zu bestimmen. Durch die Möglichkeit der analytischen Berechnung der genannten Extremwerte der eindimensionalen Beschleunigungs-Wahrscheinlichkeitsverteilung $W_a(\varphi_{RA})|_{d=d0}$ bzw. des Nulldurchgangs der Phase der eindimensionalen Beschleunigungs-Wahrscheinlichkeitsverteilung $W_a(\varphi_{RA})|_{d=d0}$ ergibt sich folglich eine erhebliche Reduzierung des Rechenaufwandes.

Dieselbe Vorgehensweise wäre natürlich entsprechend der vorstehenden Erweiterung auch bei Verwendung der Phasenwinkelgeschwindigkeiten möglich.

In der Praxis könnten die Beschleunigung und die Winkelbeschleunigung z.B. mit MEMS-Beschleunigungssensoren und Gyroskopen bestimmt werden, wobei diese Größen - über für sich allein genommen bekannte mathematische Funktionen - in $|\vec{a}_q|$ und $\Delta\beta_q$ umgerechnet werden können. Vorzugsweise wird die Richtung der Beschleunigung sukzessive ausgehend vom ersten Aperturpunkt $\vec{a}_1$, ausgehend von Aperturpunkt $\vec{a}_q$ zu Aperturpunkt $\vec{a}_{q+1}$ über ein Gyroskop nachgeführt.

Der besondere Vorteil des Verfahrens besteht darin, dass es in der Praxis sehr viel einfacher ist, Beschleunigungen mit geringen Driftfehlern zu Messen als Geschwindigkeiten oder Entfernungen. Insbesondere lässt sich dieser Vorteil in handgetragenen Funksystemen erkennen. Stattet man z.B. einen personengetragenen Transponder oder ein personengetragenes wellenbasiertes Messsystem, dass zu einem kooperativen Transponder z.B. einer Landmarke misst, mit Beschleunigungssensoren aus, so kann über die beschriebenen Verfahren sehr einfach die Entfernung und Winkellage von Sensor zu Transponder und somit eine Positionsbestimmung vorgenommen werden. Die hier vorgeschlagene Idee eignet sich daher insbesondere z.B. für indoor Navigationssysteme oder auch für handgetragene RFID-Lesegeräte mit der Fähigkeit die Position der RFID Tags relativ zum Lesegerät zu bestimmen.

Bei einem Fahrzeug mit großem Wendekreis oder einem sich nahezu geradeaus bewegtem Objekt und insbesondere bei einem Schienen- oder spurgeführten Fahrzeug oder Transportmittel - kann auf die Verwendung von Gyroskopen verzichtet werden, sofern die Phasenwinkelbeschleunigung $\alpha_q(d)$ in den Phasenbeschleunigungsprofilen $sig_{aq}(d)$, die durch die rotatorische Beschleunigung des Fahrzeugens hervorgerufen wird, gering ist.

Das vorgeschlagene Vorgehen ist analog auch für weitere aus Geschwindigkeit und Beschleunigung durch Differenzieren erzeugte Größen anwendbar.

Alle Darstellungen, die bisher aus Gründen der Verständlichkeit auf 2D-Anordnungen vereinfacht dargestellt wurden, können durch geometrische Überlegungen auf 3D-Probleme übertragen werden.

Das beschriebene Verfahren kann in vielen Anwendungen eingesetzt werden: Zur Schätzung des Winkels auf Ziele wie Transponder, RFID-Tags, die keine gute Abstandsmessung ermöglichen, in Fahrzeugen, um ein an die Eigenschaften der vorhandenen Sensorik (Drift, geringe Genauigkeit) angepasstes Verfahren zu verwenden sowie in der Positionsbestimmung mittels lokaler Funkortungssysteme und GPS aber auch zur Verwendung in der Bildgebung, Kollisionsvermeidung oder Navigation mit Primärradaren oder Ultraschallsensoren.

Bezugszeichenliste:

| | |
|---|---|
| $\vec{a}_q = (x_{aq}, y_{aq})^T$ | Aperturpunkten, q = 1, 2, ..., Q |
| $\vec{a}_q$ | vektorielle Beschleunigung |
| $\vec{a}_{qr}$ | Beschleunigungskomponente in Richtung des Einfallswinkels $\varphi_R$ |
| B | Messsignal-Bandbreite der Signale bzw. Welle |
| c | Ausbreitungsgeschwindigkeit der Signale bzw. Welle |
| c* | Phasengeschwindigkeit der Signale |
| const. | reellwertige Konstante, abhängig vom Messprinzip |
| C | Steuereinrichtung |
| d, $d_q$ | momentane Entfernung des Objekts am q-ten Aperturpunkt vom Sensor |
| $d_R$ | Bezugsentfernung vom Objekt O zum ersten Aperturpunkt |
| $f_{vqr}(\varphi_{RA})$ | Phasenvariation zur Geschwindigkeitskorrektur |
| $f_{aqr}(\varphi_{RA})$ | Phasenvariation zur Beschleunigungskorrektur |
| K | maximale Anzahl diskreter Winkelwerte |
| M | Speichereinrichtung |
| O | Objekt / Transponder |
| $p(\vec{r})$ | Objektposition |
| q | Laufindex für 1,2, ..., Q |
| Q | Anzahl von Messungen / Aperturpunkten |
| $\vec{r} = (x, y)^T$ | Raumkoordinate |
| rs | vom Objekt O kommendes Signal |
| s | Signal vom Sensor |
| S | Sensor |
| $sig_q(d)$ | Echoprofile |
| $sig_q(d, \varphi_{RA})$ | verschobene Echoprofile |
| $sig_q(d, \varphi_{RA})"$ | angepasste Echoprofile |
| sumsig $(d, \varphi_{RA})$ | Summenprofil über alle Aperturpunkte |
| $sig_{vq}(d)$ | Phasengeschwindigkeitsprofile |
| $sig_{aq}(d)$ | Phasenbeschleunigungsprofile |
| v, $\vec{v}_q$ | Geschwindigkeit |
| V | Vorrichtung |
| $W(d, \varphi_{RA})$ | Maß für die Wahrscheinlichkeit |
| $W(\varphi_{RA})$ | Maß für die Wahrscheinlichkeit des Einfallswinkels |
| $W(d)$ | Maß für die Wahrscheinlichkeit die Objektentfernung |
| $W_v(d, \varphi_{RA})$ | Geschwindigkeits-Wahrscheinlichkeitsdichtefunktion |
| $W_v(\varphi_{RA})$ | eindimensionale Wahrscheinlichkeitsfunktion |
| $W_a(d, \varphi_{RA})$ | Beschleunigungs-Wahrscheinlichkeitsverteilung |
| $W_a(\varphi_{RA})$ | eindimensionale Beschleunigungs-Wahrscheinlichkeitsverteilung |
| x, y, z | Raumkoordinaten |
| $\alpha_q(d)$ | Phasenwinkelbeschleunigung |

$\beta_q$      Bezugswinkel zwischen Koordinatensystemen

$\Delta\beta_q$      Winkel der Bewegung

$\Delta a_q$      Abstand zweier Aperturpunkten

$\Delta d_q(\varphi_R)$      lateralen Abstand quer zur Wellenausbreitungsrichtung als Längenänderung des Übertragungsweges Sensor zu Objekt von Aperturpunkt $\vec{a}_1$ zu Aperturpunkt $\vec{a}_q$

$\Delta d_q(\varphi_{RA})$      angenommener lateraler Abstand

$\Delta T_q$      Zeitintervall zwischen Messungen

$\lambda$      Wellenlänge des Signals

$\varphi_q(d)$      Phasenwinkel des Signals

$\varphi_R$      Einfallswinkel der ebenen Wellen

$\varphi_{RA}$      angenommer Winkel, unter dem das Objekt anscheinend gesehen wird

$\varphi_{RAK}$      diskrete Winkelwerte des abgedeckten Winkelbereichs

$\omega$      Kreismittenfrequenz der verwendeten Wellenform/Signale

$\omega_q(d)$      Phasenwinkelgeschwindigkeit

## Patentansprüche

1.  Verfahren mit synthetischer Apertur zum Bestimmen eines Einfallwinkels ($\varphi_R$) und/oder einer Entfernung (d) eines Sensors (S) zu zumindest einem Objekt (O) im Raum, bei dem

    - an einer Anzahl (Q) von Aperturpunkten ($\vec{a}_q$) jeweils ein Echoprofil ($sig_q(d)$) aufgenommen wird (S1 - S5),

    **dadurch gekennzeichnet, dass**

    - mehrere Winkel ($\varphi_{RA}$) als Einfallswinkel ($\varphi_R$) angenommen werden,
    - für die angenommenen Winkel ($\varphi_{RA}$) je ein Phasenkorrekturwert ($f(\Delta d_q(\varphi_{RA}))$; $\exp(-j\cdot(f_{vqr}(\varphi_{RA}))$; $\exp(-j\cdot(f_{aqr}(\varphi_{RA}))$ berechnet wird (S6),
    - angepasste Profile ($sig_q(d, \varphi_{RA})''$; $(sig_{vq}(d)\cdot e^{-j\cdot f}{}_{vqr}(\varphi_{RA})$; $(sig_{aq}(d)\cdot e^{-j\cdot f}{}_{vqr}(\varphi_{RA})$ erzeugt werden auf Basis der Echoprofile ($sig_q(d, \varphi_R)$) durch Anpassen für jeden der angenommenen Winkel ($\varphi_{RA}$) bzgl. der Phase mit dem Phasenkorrekturwert ($f(\Delta d_q(\varphi_{RA}))$; $\exp(-j\cdot(f_{vqr}(\varphi_{RA}))$; $\exp(-j\cdot(f_{aqr}(\varphi_{RA}))$,
    - für die angenommenen Winkel ($\varphi_{RA}$) aus den angepassten Profilen ($sig_q(d, \varphi_{RA})''$) eine Wahrscheinlichkeitsverteilung ($W(\varphi_{RA},d)$; $W_v(\varphi_{RA},d)$; $W_a(\varphi_{RA},d)$) gebildet wird (S8) und
    - aus der Wahrscheinlichkeitsverteilung ($W(\varphi_{RA},d)$) ein Wahrscheinlichkeitswert für den Einfallswinkel ($\varphi_R$) und/oder

    - für die angenommenen Winkel ($\varphi_{RA}$) aus der Wahrscheinlichkeitsverteilung ($W((\varphi_{RA}))$) ein Wahrscheinlichkeitswert für die Entfernung (d) bestimmt wird.

2.  Verfahren nach Anspruch 1, bei dem für die angenommenen Winkel ($\varphi_{RA}$) die angepassten Profile ($sig_q(d, \varphi_{RA})''$) aufsummiert oder integriert werden und daraus die Wahrscheinlichkeitsverteilung ($W(\varphi_{RA},d)$) gebildet wird (S8).

3.  Verfahren nach Anspruch 1 oder 2, bei dem die Phasenkorrekturwerte ($f(\Delta d_q(\varphi_{RA}))$) und/oder die Entfernungskorrekturwerte ($\Delta d_q(\varphi_{RA})$) basierend auf den Aperturpunkten ($\vec{a}_q$) aus den Positionsdaten der Apertur berechnet werden (S6).

4.  Verfahren nach einem vorstehenden Anspruch, bei dem als das angepasste Profil ein angepasstes Echoprofil ($sig_q(d, \varphi_{RA})''$) erzeugt wird, indem die Echoprofile ($sig_q(d, \varphi_R)$ für jeden angenommen Winkel ($\varphi_{RA}$) bzgl. der Phase mit dem Phasenkorrekturwert ($f(\Delta d_q(\varphi_{RA}))$) angepasst und/oder bzgl. der Entfernung mit dem Entfernungskorrekturwert ($\Delta d_q(\varphi_{RA})$) verschoben werden.

5.  Verfahren nach einem vorstehenden Anspruch, bei dem durch Aufsummieren oder Bestimmen von Maxima die Wahrscheinlichkeitsfunktion in eindimensionale Wahrscheinlichkeitsfunktionen ($W(\varphi_{RA})$, $W(d)$) getrennt werden (S9).

6.  Verfahren nach einem vorstehenden Anspruch, bei dem aus den Echoprofilen ($sig_q(d,(\varphi_R))$) eine Anzahl (Q-1) von Phasengeschwindigkeitsprofilen ($sig_{vq}(d)$) gebildet wird und Phasenwinkelgeschwindigkeiten ($\omega_q(d)$) als deren Argument bestimmt werden.

7. Verfahren nach Anspruch 6, bei dem für den zumindest einen als Einfallswinkel ($\varphi_R$) angenommenen Winkel ($\varphi_{RA}$)

   - abhängig von einer relativen Bewegungsgeschwindigkeit zwischen dem wellenbasiertem Sensor (S) und dem Objekt (O) und
   - abhängig von einer Phasenvariation ($f_{vqr}(\varphi_{RA})$) je ein komplexer Phasenkorrekturwert ($\exp(-j \cdot f_{vqr}(\varphi_{RA}))$) berechnet wird,
   - wobei eine holographische Rekonstruktion an Hand der Phasengeschwindigkeitsprofile erfolgt, wobei die relative Bewegungsgeschwindigkeit zwischen wellenbasiertem Sensor (S) und Objekt (O) gemessen wird, wobei die Position der Aperturpunkte ($\vec{a}_q$) nicht bestimmt wird.

8. Verfahren nach Anspruch 6 oder 7, bei dem für jeden angenommenen Winkel ($\varphi_{RA}$) die phasenkorrigierten Phasengeschwindigkeitsprofile zu Geschwindigkeits-Wahrscheinlichkeitsdichtefunktionen ($W_v(d, \varphi_{RA})$) aufsummiert oder integriert werden.

9. Verfahren nach einem vorstehenden Anspruch, bei dem für den zumindest einen als Einfallswinkel ($\varphi_R$) angenommenen Winkel ($\varphi_{RA}$)

   - abhängig von einer relativen Beschleunigung zwischen dem wellenbasiertem Sensor (S) und dem Objekt (O) und
   - abhängig von einer Phasenvariation ($f_{aqr}(\varphi_{RA})$) als je ein komplexer Phasenkorrekturwert ($\exp(-j \cdot f_{aqr}(\varphi_{RA}))$) als Korrektur über eine Beschleunigungsdifferenz berechnet wird.

wobei basierend auf Phasenbeschleunigungsprofilen ($sig_{aq}(d)$) eine Rekonstruktionsvorschrift definiert ist.

10. Verfahren nach Anspruch 9, bei dem aus den Echoprofilen ($sig_q(d, \varphi_R)$) eine Anzahl (Q-2) von Phasenbeschleunigungsprofilen ($sig_{aq}(d)$) gebildet wird und eine vektorielle Beschleunigung ($\vec{a}_q$) als deren Argument bestimmt werden.

11. Verfahren nach Anspruch 9 oder 10, bei dem für jeden angenommenen Winkel ($\varphi_{RA}$) die phasenkorrigierten Phasenbeschleunigungsprofile zu einer Beschleunigungs-Wahrscheinlichkeitsverteilung ($W_a(d, \varphi_{RA})$) aufsummiert oder integriert werden.

12. Verfahren nach einem der Ansprüche 9 bis 11, bei dem eine analytische Berechnung der Extremwerte der eindimensionalen Beschleunigungs-Wahrscheinlichkeitsverteilung ($W_a(\varphi_{RA}) \, I_{d=d0}$) oder des Nulldurchgangs der Phase der eindimensionalen Beschleunigungs-Wahrscheinlichkeitsverteilung ($W_a(\varphi_{RA}) \, I_{d=d0}$) durchgeführt wird.

13. Verfahren nach einem der Ansprüche 9 bis 11, bei dem zum Aufnehmen des Echoprofils ($sig_q(d)$) vom Sensor (S) ein Signal (s) zu dem zumindest einen Objekt (O) gesendet wird und das zumindest eine Objekt (O) im Raum einen Transponder aufweist oder als ein Transponder ausgebildet ist, der das Signal (s) empfängt und ein von dem Signal (s) abhängiges modifiziertes Signal als ein vom Objekt (O) kommendes Signal (rs) zu dem Sensor (S) zurücksendet, welches als im Sensor (S) empfangenes Signal als das Echoprofil ($sig_q(d)$) verwendet wird.

14. Verfahren nach einem vorherstehenden Anspruch, wobei die angepassten Profile ($sig_q(d, \varphi_{RA})"$) weiterhin erzeugt werden auf Basis der Echoprofile ($sig_q(d, \varphi)$ durch Verschieben bzgl. einer Entfernung mit einem Entfernungskorrekturwert ($\Delta d_q((\varphi_{RA})$ (S7), wobei für die angenommenen Winkel jeweils der Entfernungskorrekturwert ($\Delta d_q(\varphi_{RA})$) berechnet wird (S6).

15. Vorrichtung mit einem wellenbasierten Sensor (S) zum Aufnehmen einer Abfolge von Echosignalen ($sig_q(d)$) eines Objektes (O) und mit einer Logik und/oder mit einem auf zumindest ein Programm zugreifenden Prozessor (C) als einer Steuereinrichtung (C), wobei die Logik und/oder der Prozessor (C) ausgestaltet sind zur Durchführung eines Verfahrens nach einem vorstehenden Anspruch zum Bestimmen eines Einfallwinkels ($\varphi_R$) und/oder einer Entfernung (d) eines Sensors (S) zu zumindest einem Objekt (O) im Raum.

16. Vorrichtung nach Anspruch 15 mit einer Speichereinrichtung (M) oder einer Schnittstelle zu einer Speichereinrichtung, wobei in der Speichereinrichtung (M) das Programm gespeichert ist.

17. Vorrichtung nach Anspruch 15 oder 16, bei der das Objekt (O) einen Transponder aufweist oder als ein Transponder ausgestaltet ist.

**Claims**

1. A method utilizing a synthetic aperture for determining an angle of incidence ($\varphi_R$) and/or a distance (d) of a sensor (S) to at least one object (O) in space, in which

 - at a number (Q) of aperture points ($\vec{a}_q$), an echo profile ($sig_q$(d)) is in each case received (S1 - S5),

**characterized in that**

 - several angles ($\varphi_{RA}$) are adopted as the angle of incidence ($\varphi_R$),
 - for the adopted angles ($\varphi_{RA}$), a phase correction value ($f(\Delta d_q(\varphi_{RA})$): $\exp(-j\cdot(f_{vqr}(\varphi_{RA}))$; $\exp(-j\cdot(f_{aqr}(\varphi_{RA})$ is calculated (S6),
 - adapted profiles ($sig_q$(d, $\varphi_{RA}$)"; ($sig_{vq}$(d)$\cdot e^{-j\cdot f_{vqr}(\varphi_{RA})}$); ($sig_{aq}$(d)$\cdot e^{-j\cdot f_{vqr}(\varphi_{RA})}$) are generated on the basis of the echo profiles ($sig_q$(d, ($\varphi_R$)) by adapting for each of the adopted angles ($\varphi_{RA}$) with respect to the phase utilizing the phase correction value ($f(\Delta d_q(\varphi_{RA})$); $\exp(-j\cdot(f_{vqr}(\varphi_{RA}))$; $\exp(-j\cdot(f_{aqr}(\varphi_{RA})$),
 - for the adopted angles ($\varphi_{RA}$), a probability distribution ($W(\varphi_{RA},d)$; $W_v(\varphi_{RA},d)$; $W_a(\varphi_{RA},d)$) is generated from the adapted profiles ($sig_q$(d, $\varphi_{RA}$)") (S8), and
 - from the probability distribution ($W(\varphi_{RA},d)$), a probability value for the angle of incidence ($\varphi_R$), and/or
 - for the adopted angles ($\varphi_{RA}$), a probability value for the distance (d) is determined from the probability distribution ($W(\varphi_{RA})$).

2. The method according to claim 1, in which, for the adopted angles ($\varphi_{RA}$), the adapted profiles ($sig_q$(d, $\varphi_{RA}$)") are added up or integrated, and the probability distribution ($W(\varphi_{PRA},d)$) is generated therefrom (S8).

3. The method according to claim 1 or 2, in which the phase correction values ($f(\Delta d_q((\varphi_{RA}))$) and/or the distance correction values ($\Delta d_q((\varphi_{RA})$) are calculated from the aperture's position data based on the aperture points ($\vec{a}_q$) (S6).

4. The method according to any preceding claim, in which, as the adapted profile, an adapted echo profile ($sig_q$(d, $\varphi_{RA}$)") is produced by adapting the echo profiles ($sig_q$(d, $\varphi_R$) for each adopted angle ($\varphi_{RA}$) with respect to the phase using the phase correction value ($f(\Delta d_q(\varphi_{RA}))$) and/or by shifting with respect to the distance using the distance correction value ($\Delta d_q(\varphi_{RA})$).

5. The method according to any preceding claim, in which the probability function is split into one-dimensional probability functions ($W(\varphi_{RA})$, $W(d)$) by adding up or determining maxima (S9).

6. The method according to any preceding claim, in which, from the echo profiles ($sig_q$(d,($\varphi_R$)), a number (Q-1) of phase velocity profiles ($sig_{vq}$(d)) are generated and the phase angle velocities ($\omega_q$(d)) are determined as the argument thereof.

7. The method according to claim 6, in which for the at least one angle ($\varphi_{RA}$) adopted as an angle of incidence ($\varphi_R$),

 - depending on a relative speed of movement between the wave-based sensor (S) and the object (O), and
 - depending on a phase variation ($f_{vqr}(\varphi_{RA})$), a complex phase correction value ($\exp(-j\cdot f_{vqr}(\varphi_{RA}))$) is calculated in each case,
 - wherein a holographic reconstruction is performed using the phase velocity profiles, wherein the relative speed of movement between the wave-based sensor (S) and the object (O) is measured, wherein the aperture points' ($\vec{a}_q$) position is not determined.

8. The method according to claim 6 or 7, in which for each adopted angle ($\varphi_{RA}$), the phase-corrected phase velocity profiles are added up or integrated into velocity-probability density functions ($W_v$(d, $\varphi_{RA}$)).

9. The method according to any preceding claim, in which for the at least one angle ($\varphi_{RA}$) adopted as an angle of incidence ($\varphi_R$),

 - depending on a relative acceleration between the wave-based sensor (S) and the object (O), and
 - depending on a phase variation ($f_{aqr}(\varphi_{RA})$), in each case a complex phase correction value ($\exp(-j\cdot f_{aqr}(\varphi_{RA}))$) is calculated as a correction via an acceleration difference,

wherein a reconstruction instruction is defined based on phase acceleration profiles ($\text{sig}_{aq}$ (d)).

10. The method according to claim 9, in which, from the echo profiles ($\text{sig}_q(d, \varphi_R)$), a number (Q-2) of phase acceleration profiles ($\text{sig}_{aq}(d)$) is generated, and a vectorial acceleration ($\vec{a}_q$) is determined as the argument thereof.

11. The method according to claim 9 or 10, in which for each adopted angle ($\varphi_{RA}$), the phase-corrected phase velocity profiles are added up or integrated into velocity-probability density functions ($W_a(d, (\varphi_{RA})$)).

12. The method according to any one of claims 9 to 11, in which an analytic calculation of the extreme values of the one-dimensional acceleration probability distribution ($W_a((\varphi_{RA}) \mid_{d=d0}$) or of the zero passage of the one-dimensional acceleration probability distribution's ($W_a(\varphi_{RA}) \mid_{d=d0}$) phase is performed.

13. The method according to any one of claims 9 to 11, in which, for picking up the echo profile ($\text{sig}_q(d)$) from the sensor (S), a signal (s) is transmitted to the at least one object (O), and the at least one object (O) in space has a transponder or is configured as a transponder which receives the signal (s) and returns a modified signal depending on the signal (s) as a signal (rs) originating from the object (O) to the sensor (S) which, as a signal received in the sensor (S), is used as the echo profile ($\text{sig}_q(d)$).

14. The method according to any preceding claim, in which the adapted profiles ($\text{sig}_q(d, \varphi_{RA})''$) are further produced based on the echo profiles ($\text{sig}_q(d, \varphi)$ by shifting with respect to a distance using a distance correction value ($\Delta d_q(\varphi_{RA})$) (S7), wherein in each case the distance correction value ($\Delta d_q(\varphi_{RA})$) is calculated for the adopted angles (S6).

15. A device including a wave-based sensor (S) for picking up a sequence of echo signals ($\text{sig}_q(d)$) of an object (O), and including a logic and/or a processor (C) accessing at least one program and implemented as a control device (C), wherein the logic and/or the processor (C) are configured to execute a method according to any preceding claim in order to determine an angle of incidence ($\varphi_{PR}$) and/or a distance (d) of a sensor (S) to at least one object (O) in space.

16. The device according to claim 15 including a memory device (M) or an interface to a memory device, wherein the program is stored in the memory device (M).

17. The device according to claim 15 or 16, in which the object (O) has a transponder or is configured as a transponder.

**Revendications**

1. Procédé d'imagerie à ouverture synthétique pour la détermination d'un angle d'incidence ($\varphi_R$) et/ou d'un éloignement (d) d'un capteur (S) par rapport à au moins un objet (O) dans l'espace, dans lequel

    - respectivement un profil d'écho ($\text{sig}_q(d)$) est enregistré en un nombre (Q) de points d'ouverture ($\vec{a}_q$) (S1 - S5),

    **caractérisé en ce que**

    - plusieurs angles ($\varphi_{RA}$) sont adoptés comme angle d'incidence ($\varphi_R$),
    - pour les angles adoptés ($\varphi_{RA}$), respectivement une valeur de correction de phase ($f(\Delta d_q(\varphi_{RA}))$; $\exp(-j \bullet (f_{vqr}(\varphi_{RA}))$; $\exp(-j \bullet (f_{aqr}(\varphi_{RA})$ est calculée (S6),
    - des profils adaptés ($\text{sig}_q(d, \varphi_{RA})''$; ($sig_{vq}(d) \cdot e^{-j \cdot f}{}_{vqr}(\varphi_{RA})$; ($sig_{aq}(d) \cdot e^{-j \cdot f}{}_{vqr}(\varphi_{RA})$) sont générés sur la base des profils d'écho ($\text{sig}_q(d, \varphi_R)$) par adaptation pour chacun des angles adoptés ($\varphi_{RA}$) eu égard à la phase avec la valeur de correction de phase ($f(\Delta d_q((\varphi_{RA}))$; $\exp(-j \bullet (f_{vqr}(\varphi_{RA}))$; $\exp(-j \bullet (f_{aqr}(\varphi_{RA})$,
    - pour les angles adoptés ($\varphi_{RA}$), à partir des profils adaptés ($\text{sig}_q(d, \varphi_{RA})''$), une distribution de probabilité ($W(\varphi_{RA},d)$ ; $W_v(\varphi_{RA},d)$; $W_a(\varphi_{RA},d)$) est formée (S8) et
    - à partir de la distribution de probabilité ($W(\varphi_{RA},d)$), une valeur de probabilité pour l'angle d'incidence ($\varphi_R$) et/ou
    - pour les angles adoptés ($\varphi_{RA}$), à partir de la distribution de probabilité ($W((\varphi_{RA})$), une valeur de probabilité pour l'éloignement (d) est déterminée.

2. Procédé selon la revendication 1, dans lequel, pour les angles adoptés ($\varphi_{RA}$), les profils adaptés ($\text{sig}_q(d, (\varphi_{RA})''$) sont additionnés ou intégrés et, à partir de là, la distribution de probabilité ($W(\varphi_{RA},d)$) est formée (S8).

3. Procédé selon la revendication 1 ou 2, dans lequel les valeurs de correction de phase $(f(\Delta d_q(\varphi_{RA})))$ et/ou les valeurs de correction d'éloignement $(\Delta d_q(\varphi_{RA}))$ sont calculées à partir des données de position de l'ouverture sur la base des points d'ouverture $(\vec{a}_q)$ (S6).

4. Procédé selon une revendication précédente, dans lequel est généré, en tant que le profil adapté, un profil d'écho adapté $(sig_q(d, \varphi_{RA})'')$ en ce que les profils d'écho $(sig_q(d, \varphi_R)$ pour chaque angle adopté $(\varphi_{RA})$ eu égard à la phase sont adaptés avec la valeur de correction de phase $(f(\Delta d_q(\varphi_{RA})))$ et/ou, eu égard à l'éloignement, déplacés avec la valeur de correction d'éloignement $(\Delta d_q(\varphi_{RA}))$·

5. Procédé selon une revendication précédente, dans lequel la fonction de probabilité est séparée en fonctions de probabilité unidimensionnelles $(W(\varphi_{RA}), W(d))$ par addition ou détermination de maxima (S9).

6. Procédé selon une revendication précédente, dans lequel, à partir des profils d'écho $(sig_q(d,( \varphi_R)))$, un nombre (Q-1) de profils de vitesse de phase $(sig_{vq}(d))$ est formé et des vitesses d'angle de phase $(\omega_q(d))$ sont déterminées comme leur argument.

7. Procédé selon la revendication 6, dans lequel, pour l'au moins un angle $(\varphi_{RA})$ adopté comme angle d'incidence $(\varphi_R)$,

   - en fonction d'une vitesse de mouvement relative entre le capteur (S) à base d'onde et l'objet (O) et
   - en fonction d'une variation de phase $(f_{vqr}(\varphi_{RA}))$, respectivement une valeur de correction de phase complexe $(exp(-j \cdot f_{vqr}(\varphi_{RA})))$ est calculée,
   - sachant qu'une reconstruction holographique est effectuée à l'aide des profils de vitesse de phase, sachant que la vitesse de mouvement relative entre capteur (S) à base d'onde et objet (O) est mesurée, sachant que la position des points d'ouverture $(\vec{a}_q)$ n'est pas déterminée.

8. Procédé selon la revendication 6 ou 7, dans lequel, pour chaque angle adopté $(\varphi_{RA})$, les profils de vitesse de phase corrigés en termes de phase sont additionnés ou intégrés en fonctions de densité de probabilité de vitesse $(W_v(d, \varphi_{RA}))$.

9. Procédé selon une revendication précédente, dans lequel, pour l'au moins un angle $(\varphi_{RA})$ adopté comme angle d'incidence $(\varphi_R)$,

   - en fonction d'une accélération relative entre le capteur (S) à base d'onde et l'objet (O) et
   - en fonction d'une variation de phase $(f_{aqr}(\varphi_{RA}))$, respectivement une valeur de correction de phase complexe $(exp(-j \cdot f_{aqr}(\varphi_{RA})))$ est calculée comme correction via une différence d'accélération,

   sachant qu'une consigne de reconstruction est définie sur la base de profils d'accélération de phase $(sig_{aq}(d))$.

10. Procédé selon la revendication 9, dans lequel, à partir des profils d'écho $(sig_q(d, \varphi_R))$, une nombre (Q-2) de profils d'accélération de phase $(sig_{aq}(d))$ est formé et une accélération vectorielle $(\vec{a}_q)$ est déterminée comme leur argument.

11. Procédé selon la revendication 9 ou 10, dans lequel, pour chaque angle adopté $(\varphi_{RA})$, les profils d'accélération de phase corrigés en termes de phase sont additionnés ou intégrés en une distribution de probabilité d'accélération $(W_a(d, \varphi_{RA}))$.

12. Procédé selon l'une des revendications 9 à 11, dans lequel un calcul analytique des valeurs extrêmes de la distribution de probabilité d'accélération unidimensionnelle $(W_a(\varphi_{RA}) I_{d=d0})$ ou du passage par zéro de la phase de la distribution de probabilité d'accélération unidimensionnelle $(W_a(\varphi_{RA}) I_{d=d0})$ est effectué.

13. Procédé selon l'une des revendications 9 à 11, dans lequel, pour l'enregistrement du profil d'écho $(sig_q(d))$ par le capteur (S), un signal (s) est envoyé à l'au moins un objet (O) et l'au moins un objet (O) dans l'espace présente un transpondeur ou est constitué comme transpondeur qui reçoit le signal (s) et renvoie au capteur (S) un signal modifié dépendant du signal (s) en tant qu'un signal (rs) provenant de l'objet (O), lequel est, en tant que signal reçu dans le capteur (S), employé en tant que le profil d'écho $(sig_q(d))$.

14. Procédé selon une revendication précédente, sachant que les profils adaptés $(sig_q(d, \varphi_{RA})'')$ sont en outre générés sur la base des profils d'écho $(sig_q(d, \varphi)$ par déplacement eu égard à un éloignement avec une valeur de correction

d'éloignement ($\Delta d_q(\varphi_{RA})$ (S7), sachant que, pour les angles adoptés, respectivement la valeur de correction d'éloignement ($\Delta d_q(\varphi_{RA})$) est calculée (S6).

15. Dispositif doté d'un capteur (S) à base d'onde pour l'enregistrement d'une succession de signaux d'écho ($sig_q(d)$) d'un objet (O) et doté d'une logique et/ou d'un processeur (C) ayant accès à au moins un programme et réalisé comme dispositif de commande (C), sachant que la logique et/ou le processeur (C) sont configurés pour effectuer un procédé selon une revendication précédente pour la détermination d'un angle d'incidence ($\varphi_R$) et/ou d'un éloignement (d) d'un capteur (S) par rapport à au moins un objet (O) dans l'espace.

16. Dispositif selon la revendication 15 doté d'un dispositif de mémoire (M) ou d'une interface avec un dispositif de mémoire, sachant que le programme est mémorisé dans le dispositif de mémoire (M).

17. Dispositif selon la revendication 15 ou 16, sachant que l'objet (O) présente un transpondeur ou est configuré comme transpondeur.

Fig. 1

Fig. 4

$$q=0 \quad \sim S1$$

$$q=q+1 \quad S2$$

gehe zu q-tem Aperturpunkt $a_q$ — S3

messe Q Echoprofile $sig_q(d,\varphi_R)$ — S4

$q < Q?$ — S5

Ja

Nein — S6

Für mehrere als Einfallswinkel angenommene Winkel $\varphi_{RA}$ je einen Phasenkorrekturwert $f(\Delta d_q(\varphi_{RA}))$ und optional je einen Entfernungskorrekturwert $\Delta d_q(\varphi_{RA})$ basierend auf Aperturpunkten als Positionsdaten der Apertur berechnen

S7

phasenkorrigiertes / angepasstes Echoprofil $sig_q(d,\varphi_{RA})''$ erzeugen. Dazu Echoprofile $sig_q(d,\varphi_R)$ für jeden angenommen Winkel $\varphi_{RA}$ bzgl. der Phase mit dem Phasenkorrekturwert $f(\Delta d_q(\varphi_{RA}))$ anpassen und optional auch bzgl. der Entfernung mit dem Entfernungskorrekturwert $\Delta d_q(\varphi_{RA})$ verschieben

S8

Für jeden angenommen Winkel $\varphi_{RA}$ alle angepassten Echoprofile $sig_q(d,\varphi_{RA})''$ aufsummieren und daraus eine Wahrscheinlichkeitsverteilung $W(\varphi_{RA},d)$ ableiten

S9

Durch Aufsummieren oder bestimmen der Maxima die Wahrscheinlichkeitsfunktion in $W(\varphi_{RA})$, $W(d)$ trennen

S10

- Wahrscheinlichkeitsverteilung $W(\varphi_{RA})$ liefert Aussage darüber, ob der angenommene Winkel $\varphi_{RA}$ dem tatsächlichen Einfallswinkel $\varphi_R$ entspricht
- Wahrscheinlichkeitsverteilung $W(d)$ liefert Aussage darüber, ob der Entfernungswert d der unbekannten/tatsächlichen Entfernung $d_R$ entspricht.

## Fig. 2

q=0  — S1

S2-S4

q=q+1
gehe zu q-tem Aperturpunkt $a_q$
und messe Q Echoprofile $sig_q(d,\varphi_R)$

S5

α < 0?

Ja

Nein

S6a*

Aus Echoprofilen $sig_q(d,\varphi_R)$ eine Anzahl Q-1 von Phasengeschwindigkeitsprofilen $sig_{vq}(d)$ bilden und Phasenwinkelgeschwindigkeiten $\omega_q(d)$ als deren Argument bestimmen, deren Phasenverlauf liefert Aussagen über Entfernungsänderung bzw. radiale Geschwindigkeit

S6*

Für mehrere als Einfallswinkel angenommene Winkel $\varphi_{RA}$ abhängig von einer relativen Bewegungsgeschwindigkeit zwischen wellenbasiertem Sensor S und Objekt O und abhängig von einer Phasenvariation $f_{vqr}(\varphi_{RA})$ je einen komplexen Phasenkorrekturwert $\exp(-j \cdot f_{vqr}(\varphi_{RA}))$ als Korrektur über eine Geschwindigkeitsdifferenz und optional Entfernungskorrekturwerte $\Delta d_q(\varphi_{RA})$ berechnen

S7*

phasenkorrigierte Phasengeschwindigkeitsprofile $sig_{vq}(d) \cdot \exp(-j \cdot f_{vqr}(\varphi_{RA}))$ erzeugen und optional Entfernung mit dem Entfernungskorrekturwert $\Delta d_q(\varphi_{RA})$ verschieben

S8*

Für jeden angenommen Winkel $\varphi_{RA}$ die phasenkorrigierten Phasengeschwindigkeitsprofile aufsummieren zu Geschwindigkeits-Wahrscheinlichkeitsdichtefunktionen $W_v(d,\varphi_{RA})$, insb. deren Realteil

S10*

• Geschwindigkeits-Wahrscheinlichkeitsdichtefunktionen $W_v(d,\varphi_{RA})$, insb. deren Realteil liefert Aussage darüber, ob der angenommene Winkel $\varphi_{RA}$ dem tatsächlichen Einfallswinkel $\varphi_R$ entspricht
• Geschwindigkeits-Wahrscheinlichkeitsdichtefunktionen $W_v(d,\varphi_{RA})$ liefert Aussage darüber, ob der Entfernungswert d der unbekannten/tatsächlichen Entfernung $d_R$ entspricht.

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006072471 A
- DE 19910715 C2
- EP 0550073 B1
- DE 102005000732 A1
- DE 19512787 A1
- DE 10157931 C2
- DE 102006005281
- DE 102005037583

**In der Beschreibung aufgeführte Nicht-Patentliteratur**

- Radar mit realer und synthetischer Apertur. **H. KLAUSING ; W. HOLPP.** Oldenbourg. 2000, 213 ff
- **M. YOUNIS ; C. FISCHER ; W. WIESBECK.** Digital beamforming in SAR systems. *Geoscience and Remote Sensing, IEEE Transactions on,* 2003, vol. 41, 1735-1739
- **M. VOSSIEK ; V. MÁGORI ; H. ERMERT.** An Ultrasonic Multielement Sensor System for Position Invariant Object Identification. *vorgetragen beim IEEE International Ultrasonics Symposium, Cannes, France,* 1994
- **M. VOSSIEK.** Ein Ultraschall-Mehrwandlersystem zur lageunabhängigen Objekterkennung für die industrielle Automation. *Fortschritt-Berichte VDI, Reihe 8: Mess-, Steuerungs- und Regelungstechnik,* 1996, vol. 564
- **M. VOSSIEK ; A. URBAN ; S. MAX ; P. GULDEN.** Inverse Synthetic Aperture Secondary Radar Concept for Precise Wireless Positioning. *IEEE Trans. on Microwave Theory and Techniques,* November 2007, vol. 55, 2447-2453
- **STELZER, A. ; FISCHER, A. ; VOSSIEK, M.** A New Technology for Precise Position Measurement-LPM. *Microwave Symposium Digest, 2004, IEEE MTT-S International,* 06. Juni 2004, vol. 2, 655-658
- **R. GIERLICH ; J. HUTTNER ; A. ZIROFF ; M. HUEMER.** Indoor positioning utilizing fractional-N PLL synthesizer and multi-channel base stations. *Wireless Technology, 2008, EuWiT 2008, European Conference on,* 2008, 49-52
- **S. ROEHR ; P. GULDEN ; M. VOSSIEK.** Precise Distance and Velocity Measurement for Real Time Locating in Multipath Environments Using a Frequency-Modulated Continuous-Wave Secondary Radar Approach. *IEEE Transactions on Microwave Theory and Techniques,* 2008, vol. 56, 2329-2339
- Synthetic Aperture Radar. **L.J. CUTRONA.** Merrill I. Skolnik: ''Radar Handbook. McGraw Hill, 1990, 21.1-21.23
- **DEAN L. MENSA.** High Resolution Radar Cross-Section Imaging. Artech House, Boston, 1991, 183-199
- **H. RUDOLF et al.** A parallelogramm shaped arm for improving circular SARs. *Geoscience and Remote Sensing Symposium 1999,* 28. Juni 1999, vol. 1, 553-555